# EUROPÄISCHE PATENTANMELDUNG

(11) **EP 4 389 655 A1**
(43) Veröffentlichungstag der Anmeldung: **26.06.2024**
(21) Anmeldenummer: 22216389.1
(22) Anmeldetag: 23.12.2022
(51) Int. Cl.: B65G 47/256, B30B 11/08, B30B 15/32

(54) **VORRICHTUNG ZUM SORTIEREN VON BECHERFÖRMIGEN KOMPONENTEN**

(71) Anmelder: Korsch AG, 13509 Berlin (DE)
(72) Erfinder: Schulzke, Martin, 10559 Berlin (DE)
(74) Vertreter: Hertin und Partner Rechts- und Patentanwälte PartG mbB

(57) **Zusammenfassung**

Die Erfindung betrifft eine Vorrichtung zum Transport von becherförmigen Komponenten an eine Rundlaufpresse, wobei die Vorrichtung einen Kanal mit einem Sortierelement und einer Aussparung für den Ausstoß von falsch ausgerichteten becherförmigen Komponenten umfasst. Zudem betrifft die Erfindung ein Kit umfassend die Vorrichtung und eine Vielzahl von becherförmigen Komponenten. Des Weiteren betrifft die Erfindung ein System umfassend die Vorrichtung, eine Zuführeinheit, eine Einlegeeinheit und eine Rundlaufpresse umfasst. Weiterhin betrifft die Erfindung ein Verfahren zum Zuführen vereinzelter ausgerichteter becherförmiger Komponenten in Matrizen einer Rundlaufpresse.

## Beschreibung

Die Erfindung betrifft eine Vorrichtung zum Sortieren von becherförmigen Komponenten für die Zufuhr an eine Rundlaufpresse. Die Vorrichtung umfasst einen Kanal mit einem Sortierelement und einer Aussparung für den Ausstoß von falsch ausgerichteten becherförmigen Komponenten. Zudem betrifft die Erfindung ein Kit umfassend die Vorrichtung und eine Vielzahl von becherförmigen Komponenten. Des Weiteren betrifft die Erfindung ein System umfassend die Vorrichtung, eine Zuführeinheit, eine Einlegeeinheit und eine Rundlaufpresse. Ferner betrifft die Erfindung ein Verfahren zum Zuführen vereinzelter ausgerichteter becherförmiger Komponenten in Matrizen einer Rundlaufpresse.

### Hintergrund und Stand der Technik

Die Erfindung betrifft das Gebiet der Tablettenherstellung, insbesondere der Herstellung von mehrkomponentigen Tabletten. Zudem betrifft die Erfindung das Gebiet der automatisierten Herstellung von Tabletten aus becherförmigen Komponenten und aus verpressten pulverförmigen Materialien, wie beispielsweise Knopfzellen, in Rundlaufpressen.

Im Stand der Technik ist es bekannt, Rundlaufpressen einzusetzen, um Batterien, insbesondere Knopfzellen, herzustellen. Die Knopfzelle besteht in der Regel aus einem Becher in den eine Tablette aus Metalloxidpulver, die sogenannte Kathode, eingelegt und eingepresst wird. Bei der anschließenden Montage der Knopfzelle wird auf die eingepresste Metalloxid-Tablette ein Separator und/oder weitere Komponente eingeführt und/oder eingepresst. Anschließend kann die Öffnung des Bechers mit einem Werkzeug nach innen gebördelt werden, wobei der Decken über den Druck der Dichtung nach unten gedrückt wird und die Knopfzelle gasdicht verschlossen wird. Eine derartige Verwendung einer Rundlaufpresse zur Herstellung von Knopfzellen ist beispielsweise aus der WO 2017/162848 A1 bekannt.

Damit den oben genannten Vorgang automatisiert mit einer Rundlaufpresse durchgeführt werden kann, müssen die Becher vereinzelt und mit ihrer Öffnungen nach oben in die Rundlaufpresse eingelegt werden. Eine vorgepresste Metalloxid-Pulvertablette wird dann, wie in der WO 2017/162848 A1 beschrieben, in die Öffnung des Bechers eingelegt und durch ein Zusammenwirken von Ober- und Unterstempeln gepresst. Dieser Vorgang kann für weitere Komponenten oder Materialschichten, die in den Becher eingelegt werden, mit weiteren Rundlaufpressen wiederholt werden, um eine mehrschichtige Knopfzelle herzustellen.

Um Abfall zu vermeiden und die Leistung solcher Rundlaufpressen zu maximieren, ist es notwendig, dass alle Becher mit ihrer Öffnung nach oben (d.h. in der erwünschten Ausrichtung) in die Matrizen positioniert werden. Derzeit sind keine effizienten, energiesparenden Lösungen bekannt, um sicherzustellen, dass die Becher nicht in der unerwünschten Ausrichtung in die Matrizen eingesetzt werden.

Der Stand der Technik umfasst allerdings Vorrichtungen zum Sortieren von formanisotropen Komponenten nach ihrer Ausrichtung. EP1834905A1 beschreibt ein Beispiel einer solchen Vorrichtung. Die formanisotropen Komponenten werden als Schüttgut in zufälligen Orientierungen in die Vorrichtung eingeführt. Die Komponenten werden dann durch eine spiralförmige Schikane geführt, wobei Vibrationen, Schwerkraft und ein sich verengender Schikaneboden zusammenwirken, um die formanisotrope Komponente in eine instabile Position zu bringen. Die instabile Position ist vorzugsweise dadurch gekennzeichnet, dass eine schmalere Seite der Komponente eine Basis bildet. In dieser instabilen Position werden Komponenten, die so ausgerichtet sind, dass ihr Schwerpunkt außerhalb des schmalen Bodens der Schikane liegt, durch Schwerkraft gekippt und von der Schikane aussortiert. Die übrigen Komponenten werden als korrekt ausgerichtet betrachtet und fließen zu einer weiteren Prozessstation.

Das Prinzip der Sortierung der EP1834905A1 basiert darauf, dass die zu sortierenden Komponenten eine deutlich geringere Breite (Basis) im Vergleich zu ihrer Höhe haben, so dass ihre Position instabil sein kann. Bei Komponenten mit ähnlicher Höhe und Breite ist eine geringere Sortierzuverlässigkeit zu erwarten. Außerdem können die Vibrationen zu Beschädigung und ungewollte Aussortierung der korrekt ausgerichteten Komponenten, was die Effizienz des Vorgangs verringert.

US3656605A offenbart eine Vorrichtung zum Sortieren von Flaschendeckeln. Die Vorrichtung umfasst eine vibrierende Schale, die willkürlich ausgerichtete Flaschendeckel nach oben in eine offene spiralförmige Bahn befördert. Die spiralförmige Bahn ist mit Rillen versehen, die den Eintritt der Flaschendeckel gemäß ihrer Ausrichtung begrenzen. Die Flaschendeckel weisen ringförmige Flansche auf, die nur in die Rillen eintreten können, wenn die Öffnung der Flaschendeckel nach oben gerichtet ist. Andernfalls verhindern die ringförmigen Flansche den Eintritt der Flaschendeckel in die Bahn. Dies ermöglicht die Produktion eines Stroms von Flaschendeckeln, welche alle die gleiche Ausrichtung aufweisen. Das vorgeschlagene Prinzip setzt jedoch voraus, dass die zu sortierenden Flaschendeckel einen unterschiedlichen Querschnitt aufweisen, in Abhängigkeit davon, ob ihre Öffnung nach oben oder unten ausgerichtet ist. Bei Flaschendeckeln (oder anderen becherförmigen Komponenten), die in beiden Ausrichtungen einen gleichen Querschnitt aufweisen, bewirken die Rillen keine Sortierung der Komponenten in der Bahn. Es besteht daher Bedarf an einer einfachen Vorrichtung, welche becherförmige Komponenten auch in dem Fall sortieren kann, wenn ihr Querschnitt identisch ist, egal ob ihre Öffnung nach oben oder nach unten gerichtet ist.

CN104828531A offenbart eine Vorrichtung zum Sortieren von Verschlusskappen für Flaschen. Die Vorrichtung umfasst ein Gehäuse, einen Drehteller, eine offene Spiralbahn, einen Sortierabschnitt und einen Auslasskanal. Der Drehteller dreht sich derart, dass eine Schwingung sowie eine Zentrifugalkraft auf die auf dem Drehteller liegenden Verschlusskappen ausgeübt wird. Zufällig ausgerichtete Verschlusskappen werden so in die Spiralbahn geleitet, bis sie einen Sortierabschnitt erreichen. Der Boden des Sortierabschnitts ist gewellt, so dass eine Verschlusskappe mit einer nach unten gerichteten Öffnung nicht stabil genug unter Wirkung der Schwingung auf dem gewellten Boden fließen kann, insbesondere wenn die Verschlusskappe durch den Strom weiterer Verschlusskappen nach dem Auslasskanal gedrückt wird. Die Verschlusskappe fällt aus dem Sortierbereich und kehrt zum Drehtisch zurück. Verschlusskappen mit einer nach oben gerichteten Öffnung hingegen können stabiler auf dem gewellten Boden fließen und über den Auslasskanal zur weiteren Verarbeitung herauskommen.

Die Vorrichtung von CN104828531A funktioniert jedoch nicht effizient für das Sortieren becherförmiger Komponenten mit größeren Durchmessern im Vergleich zu ihren Höhen, da solche Komponenten unabhängig von ihrer Ausrichtung über die gewellte Oberfläche fließen können. Stattdessen basiert die in der CN104828531A vorgeschlagene Vorrichtung darauf, dass der Schwerpunkt der Flaschendeckel nahe an ihren geschlossenen Flächen liegt, so dass es einen möglichst großen Unterschied in der Stabilität zwischen den zwei möglichen Ausrichtungen gibt. Bei relativ flachen becherförmigen Komponenten - wie den Bechern von Knopfzellen - ist der Schwerpunkt oftmals nicht stark verschoben. Die Vorrichtung wäre daher nicht für die Sortierung derartiger becherförmigen Komponenten geeignet.

Im Lichte des Standes der Technik besteht daher ein Bedarf an einer zuverlässigen und energieeffizienten Vorrichtung und Verfahren zum Sortieren becherförmiger Komponenten, insbesondere becherförmiger Komponenten, welche einen gleichen Querschnitt aufweisen, unabhängig davon, ob ihre Öffnung nach oben oder unten zeigt, und/oder die flach ausgestaltet sind, d.h. ein großes Verhältnis von Durchmesser zur Höhe aufweisen. Darüber hinaus besteht ein Bedarf an einem System für die vereinzelte Platzierung von ausgerichteten becherförmigen Komponenten in die Matrizen einer Rundlaufpresse.

### Zusammenfassung der Erfindung

Der Erfindung liegt somit die Aufgabe zugrunde, die Nachteile des Standes der Technik zu beseitigen und eine Vorrichtung bereitzustellen, welche becherförmige Komponenten gemäß ihrer Ausrichtung zuverlässig sortieren kann. Weiterhin war es eine Aufgabe der Erfindung, ein Kit, ein System und ein Verfahren bereitzustellen, welche das zuverlässige Einlegen vereinzelter ausgerichteter Becher in eine Rundlaufpresse ermöglichen.

Erfindungsgemäß wird die Aufgabe durch die unabhängigen Ansprüche gelöst. Die abhängigen Patentansprüche stellen bevorzugte Ausführungsformen der erfindungsgemäßen Vorrichtung sowie der erfindungsgemäßen Verfahren dar.

Die Erfindung betrifft in einem ersten Aspekt eine Vorrichtung zum Transport von becherförmigen Komponenten an eine Rundlaufpresse. Die Vorrichtung umfasst einen Kanal, dessen Querschnitt bevorzugt auf einen Querschnitt der becherförmigen Komponenten angepasst ist, sodass die becherförmigen Komponenten in den Kanal entweder in einer ersten Ausrichtung mit einer Öffnung nach oben oder in einer zweiten Ausrichtung mit der Öffnung nach unten einführbar sind. Ein Kanalboden des Kanals umfasst eine untere Aussparung für die Unterbringung eines Sortierelements. Das Sortierelement umfasst eine nach oben ausgerichtete gewölbte Oberfläche, welche dafür konfiguriert ist, mit der Öffnung der becherförmigen Komponenten in der zweiten Ausrichtung in Eingriff zu kommen. Der Kanal umfasst weiterhin eine seitliche Aussparung in einer ersten Seitenwand für den Ausstoß der becherförmigen Komponenten der zweiten Ausrichtung, wobei die seitliche Aussparung vorzugsweise mit der unteren Aussparung verbunden ist und einen Ausstoßpfad definiert.

Die bevorzugte Anpassung des Querschnitts des Kanals an den Querschnitt der becherförmigen Komponenten ermöglicht eine bessere Kontrolle der becherförmigen Komponenten, sodass sie nur in einer von zwei möglichen Ausrichtungen in den Kanal eingeführt werden können. Auf diese Weise können die becherförmigen Komponenten mit einer hohen Geschwindigkeit durch den Kanal bewegt werden, z.B. durch eine sich verengende Verbindung von einer Zuführeinheit. Durch die angepasste Form des Kanals können sich die becherförmigen Komponenten nämlich nicht in allen Richtungen frei drehen, während sie sich im Kanal befinden, oder durch die Seiten oder die Oberseite des Kanals entweichen, es sei denn, sie werden durch das Sortierelement aussortiert. Da nur eine der beiden möglichen Ausrichtungen zu einem Eingriff mit dem Sortierelement und einem Ausstoß der becherförmigen Komponente führen kann, ist die Vorrichtung wesentlich zuverlässiger als bekannte Vorrichtungen des Standes der Technik. Weiterhin können sich die becherförmigen Komponenten mit einer hohen Geschwindigkeit durch den Kanal bewegen, ohne dass ein Risiko besteht, dass diese aus dem Kanal ungewollt entweichen. Bei offenen Spiralpfaden des Stands der Technik (z.B. EP1834905A1) muss die Geschwindigkeit hingegen begrenzt werden, um ein Ausfallen der Komponenten zu verhindern, wodurch sich der Durchsatz und die Produktivität reduziert.

Die Unterbringung eines Sortierelements in einer unteren Aussparung im Kanalboden ermöglicht eine äußerst kompakte Ausgestaltung der Vorrichtung. Im Gegensatz zum Stand der Technik, bei dem die Sortierung der becherförmigen Komponenten einen langen Übergang in der Form der spiralförmigen Schikane erfordert und viel Platz einnimmt, kann das Sortieren bei der vorliegenden Vorrichtung über eine kurze Strecke erfolgen. Somit braucht die erfindungsgemäße Vorrichtung wenig Platz und kann auf kompakte Weise zwischen einer Zuführeinheit und einer Einlegeeinheit eingebracht werden. Durch eine Unterbringung in der unteren Aussparung beschränkt das Sortierelement zudem nicht den Querschnitt des Kanalhohlraums. Korrekt ausgerichtete becherförmigen Komponenten können im Wesentlichen in einer geraden Linie über das Sortierelement fließen, sodass das Risiko von Reibung oder Oberflächenschäden an der Oberfläche der becherförmigen Komponenten reduziert wird. Dies ermöglicht hohe Verarbeitungsgeschwindigkeiten durch einen kurzen Kanal. Im Gegensatz dazu besteht bei einer längeren, spiralförmigen Bahn, bei der die Komponenten aufgrund der Zentrifugalkraft gegen eine Seite der Vorrichtung gedrückt werden, die Gefahr, dass die Komponenten bei höheren Geschwindigkeiten zerkratzt werden. Die erfindungsgemäße Vorrichtung eignet sich daher insbesondere besser für eine Verarbeitung von Komponenten, bei denen die Oberflächenqualität und das Fehlen von Verunreinigungen von hoher Wichtigkeit sind, wie z.B. in der pharmazeutischen und elektrochemischen Industrie.

Das Sortierelement dient dazu, in die becherförmigen Komponenten, deren Öffnung nach unten, d.h. auf den Kanalboden gerichtet ist, einzugreifen. Da das Sortierelement nicht flach ist, sondern eine gewölbte Oberfläche aufweist, die in der unteren Aussparung untergebracht ist, ermöglicht das Sortierelement die Bildung einer abgesenkten Stützfläche innerhalb der unteren Aussparung. Die abgesenkte Stützfläche kann eine Vertiefung zwischen der gewölbten Oberfläche und den Kanten der unteren Aussparung bilden. Die becherförmige Komponente, deren Öffnung nach unten gerichtet ist, kann in die Vertiefung absenken, so dass ihr weiterer Fluss durch den Kanal unterbrochen wird. Einmal auf diese Weise abgesenkt, wird die becherförmige Komponente durch die Höhe der Kanten der unteren Aussparung daran gehindert, bei einem weiteren Fortbewegen im Kanal auf den Kanalboden zurückzukehren.

Die gewölbte Außenfläche des Sortierelements ermöglicht stattdessen eine sanfte Umlenkung der becherförmigen Komponente in Richtung des Ausstoßpfads. Dies kann durch die Strömung weiterer becherförmiger Komponenten stromaufwärts im Kanal gefördert werden, so dass die auszusortierende becherförmige Komponente über die seitliche Aussparung aus dem Kanal geschoben wird.

Durch die Verbindung der unteren Aussparung mit der seitlichen Aussparung kann die abgesenkte becherförmige Komponente in der unteren Aussparung ohne Hindernisse direkt in die seitliche Aussparung kippen. Die Vorrichtung wird dadurch noch kompakter und die becherförmige Komponente wird auch bei einem Ausstoßen kaum einer Reibung ausgesetzt.

Vorteilhafterweise erfordern die Merkmale der Vorrichtung keine beweglichen Verbindungen. Somit benötigt die Vorrichtung keine zusätzliche Energieversorgung oder komplexe Steuerungen zum Betrieb. Der Aufbau erhöht auch die Langlebigkeit der Vorrichtung, da das Risiko eines Verschlei-ßes gering ist.

Im Sinne der Erfindung ist ein Kanal vorzugsweise ein länglicher Hohlraum. Vorzugsweise ist der Kanal für die Bewegung eines Stroms von becherförmigen Komponenten in einer vorbestimmten Hauptfließrichtung konfiguriert. Die Hauptfließrichtung verläuft vorzugsweise parallel zu einer Längsachse des Kanals. Vorzugsweise ist der Hohlraum durch einen Kanalboden, Seitenwände und optional eine Kanaldecke begrenzt. Der Kanal umfasst vorzugsweise mindestens einen Einlass für die fließenden Komponenten, nämlich unsortierte becherförmige Komponenten, und mindestens zwei Auslässe für die sortierten becherförmigen Komponenten.

Ein Kanalquerschnitt, welcher auf die Form becherförmiger Komponenten angepasst ist, meint im Sinne der Erfindung vorzugsweise einen Querschnitt des durch den Kanalboden und die Seitenwände definierten Hohlraumes, der so gestaltet ist, dass er becherförmige Komponenten nur in einer von zwei Ausrichtungen aufnehmen kann: mit ihrer Öffnung nach oben oder mit ihrer Öffnung nach unten. Vorzugsweise kann der Kanalquerschnitt die Form eines Rechtecks aufweisen, wobei die Höhe und Breite des Rechteckes vorzugsweise im Wesentlichen einer Höhe und Breite einer becherförmigen Komponente entspricht.

Eine "Höhe" eines Gegenstandes im Sinne der Erfindung ist vorzugsweise eine Ausdehnung des Gegenstandes in vertikaler Richtung, insbesondere in Richtung der Schwerkraft. Im Sinne der Erfindung ist eine "Breite" eines Gegenstands vorzugsweise eine Ausdehnung des Gegenstands in einer Richtung orthogonal zu seiner Höhe, insbesondere einer horizontalen Querrichtung. Vorzugsweise beziehen sich diese Richtungen auf die Ausrichtung eines Gegenstands in seinem normalen Gebrauch.

Die Höhe eines Kanals ist vorzugsweise ein Abstand zwischen dem Kanalboden und einer Kanaldecke. Die Höhe kann auch durch die maximale vertikale Ausdehnung der Seitenwände von dem Kanalboden charakterisiert werden. Vorzugsweise liegt die Höhe des Kanals zwischen 1 - 100 mm, bevorzugt zwischen 2 - 30 mm. Die Breite des Kanals ist vorzugsweise der Abstand zwischen der ersten Seitenwand und der zweiten Seitenwand. Vorzugsweise liegt die Breite des Kanals zwischen 1 - 100 mm, bevorzugt zwischen 2 - 50 mm.

Die Höhe einer becherförmigen Komponente ist vorzugsweise ihre charakteristische vertikale Ausdehnung, wenn ihre Öffnung nach oben oder nach unten gerichtet ist. Die Breite einer becherförmigen Komponente ist vorzugsweise ihre charakteristische horizontale Ausdehnung, wenn ihre Öffnung nach oben oder nach unten gerichtet ist. Beispielsweise ist die Breite einer zylindrischen becherförmigen Komponente vorzugsweise der Durchmesser des Zylinders. Die Breite einer quaderförmigen becherförmigen Komponente ist vorzugsweise der Abstand zwischen zwei parallelen Wänden ihrer Mantelfläche.

Vorzugsweise ist der angepasste Querschnitt in mindestens einem Teil des Kanals vorhanden, wobei der mindestens eine Teil vorzugsweise einen Einlass des Kanals umfasst. Vorzugsweise ist ein Abstand zwischen den Seitenwänden des Kanals gleich einer Breite der becherförmigen Komponente in der ersten oder zweiten Ausrichtung, mit einer Toleranz von bis zu 2 mm, vorzugsweise bis zu 1 mm, besonders bevorzugt bis zu 0,5 mm. Vorzugsweise ist eine Höhe einer oder beider Seitenwände des Kanals gleich einer Höhe der becherförmigen Komponente in der ersten oder zweiten Ausrichtung, mit einer Toleranz von bis zu 2 mm, vorzugsweise bis zu 1 mm, besonders bevorzugt bis zu 0,5 mm.

Der angepasste Querschnitt des Kanals lässt vorzugsweise im Wesentlichen keine Bewegung der becherförmigen Komponenten in seitlicher Richtung zu. Vorzugsweise ist der angepasste Kanalquerschnitt auch so gestaltet, dass er im Wesentlichen keine Nick- oder Rollbewegungen der becherförmigen Komponenten zulässt, insbesondere so, dass sie die gleiche Ausrichtung beibehalten, während sie sich entlang des Kanals bewegen.

Der Kanal kann vorzugsweise auch eine Kanaldecke umfassen. Eine Kanaldecke kann ein unerwünschtes Entweichen der becherförmigen Komponenten verhindern, um insbesondere höhere Fließgeschwindigkeiten zu unterstützen. Vorzugsweise ist der vertikale Abstand zwischen der Kanaldecke und dem Kanalboden ungefähr so groß wie die Höhe der becherförmigen Komponenten in einer der beiden zulässigen Ausrichtungen. Beispielsweise kann der Spielraum zwischen becherförmigen Komponenten und der Kanaldecke weniger als 2 mm, vorzugsweise weniger als 1 mm, noch besser weniger als 0,5 mm betragen.

Im Sinne der Erfindung ist eine becherförmige Komponente (hier auch als "Becher" bezeichnet) ein fester Gegenstand, der einen offenen Hohlraum umfasst. Der Hohlraum ist vorzugsweise so gestaltet, dass er später mit einer weiteren Komponente oder einem Material gefüllt werden kann. Die becherförmige Komponente weist vorzugsweise eine geschlossene Grundfläche und eine Mantelfläche auf, welche den Hohlraum von unten und seitlich begrenzen. Anstelle einer Begrenzung nach oben durch einen Deckel liegt hingegen eine Öffnung vor, welche eine Befüllung des Hohlraums durch weitere Komponenten ermöglicht. Die Öffnung ist vorzugsweise durch einen Rand definiert, welcher durch die Mantelfläche gebildet wird.

Die Geometrie der becherförmigen Komponente bzw. des umfassten Hohlraums ist grundsätzlich nicht begrenzt. Sie kann zum Beispiel im Wesentlichen zylindrisch, quaderförmig, ellipsoid oder anders geformt sein. Im Falle einer zylindrischen becherförmigen Komponente ist die Grundfläche sowie die gegenüberliegende Öffnung vorzugweise eine Kreisfläche. Die Mantelfläche ist hingegen eine Zylinderfläche. Im Falle einer quaderförmigen, becherförmigen Komponente ist die Grundfläche sowie die Öffnung vorzugsweise ein Rechteck und die Mantelfläche umfasst vier Mantelwände.

Die becherförmige Komponente kann auch eine beliebige Größe haben, aber ihre Abmessungen liegen vorzugsweise in der Größenordnung von einigen mm, zum Beispiel mit einer Höhe von 1 - 100 mm, vorzugsweise 2 - 30 mm und einer Breite bzw. Länge von 1 - 100 mm, vorzugsweise 2 - 50 mm, besonders bevorzugt 2 - 30 mm. In bevorzugten Ausführungsformen hat ein Kanal der Vorrichtung somit ebenfalls einen Querschnitt, welcher bevorzugt im Wesentlichen eine Höhe von 2 - 30 mm und einer Breite von 2 - 30 mm aufweist.

Vorzugsweise hat die becherförmige Komponente in beiden zulässigen Ausrichtungen (Öffnung nach oben oder unten) ungefähr den gleichen Querschnitt. Zum Beispiel kann die becherförmige Komponente eine konstante Breite oder einen konstanten Durchmesser haben. Die becherförmige Komponente ist zum Beispiel das Gehäuse einer Knopfzelle.

Im Sinne der Erfindung ist ein Sortierelement vorzugsweise eine Komponente, die so geformt ist, dass sie in die becherförmigen Komponenten eingreift, deren Öffnung nach unten zeigt, aber nicht in becherförmigen Komponenten, welche derart ausgerichtet vorliegen, dass diese eine nach oben gerichtete Öffnung aufweisen. Das Sortierelement hat eine gewölbte Oberfläche, die vorzugsweise so dimensioniert ist, dass ein konvexer Teil der gewölbten Oberfläche in die Öffnung einer becherförmigen Komponente eintreten kann, insbesondere wenn die becherförmige Komponente in die untere Aussparung abgesenkt wird. Das Sortierelement kann stationär angeordnet sein, frei in der unteren Aussparung rollen oder sich nach einem vorgegebenen Muster bewegen.

Im Sinne der Erfindung bezeichnet ein Eingriff zwischen einer becherförmigen Komponente und einem Sortierelement vorzugsweise, dass die becherförmige Komponente mit ihrer nach unten gerichteten Öffnung derart nach unten abgesenkt wird, sodass sich ein Teil des Sortierelements in die Öffnung der becherförmigen Komponente eintritt. Die becherförmige Komponente befindet sich vorzugsweise mithin im Eingriff, sofern eine Mantelfläche der becherförmigen Komponente auf der gewölbten Oberfläche des Sortierelements aufsetzt und ein davon eingeschlossener Abschnitt der gewölbten Oberfläche mindestens teilweise in die Öffnung der becherförmigen Komponente ragt.

Im Sinne der Erfindung bezeichnet eine Aussparung vorzugsweise eine Unterbrechung in der Innenfläche des Kanals dar. Die Aussparung muss jedoch kein Durchgangsloch sein und kann, je nach Dicke des Kanalbodens und der Wände, auch nur eine ausreichende Vertiefung bzw. Einbuchtung darstellen. Die Abmessungen der Aussparung sind vorzugsweise so gestaltet, dass die becherförmige Komponente in mindestens einer Ausrichtung aufgenommen werden kann, zum Beispiel in einer abgesenkten und/oder gekippten Ausrichtung.

Im Sinne der Erfindung bezeichnet der Begriff "untere Aussparung" vorzugsweise eine Unterbrechung im Kanalboden, wobei die Unterbrechung vorzugsweise für die Positionierung eines Sortierelements und/oder für das Absenken einer becherförmigen Komponente konfiguriert ist. Die untere Aussparung ist vorzugsweise so dimensioniert, dass sie einen absinkenden Becher aufnehmen kann, dessen Öffnung nach unten zeigt.

Vorzugsweise ist die untere Aussparung mindestens teilweise kreisförmig mit einem Durchmesser kleiner als ein Durchmesser des Sortierelements und mindestens so groß wie ein Durchmesser der becherförmigen Komponente. Vorzugsweise hat die untere Aussparung einen Durchmesser zwischen 2 - 25 mm, besonders bevorzugt 8 - 20 mm, noch bevorzugter ungefähr 12 mm. Eine kreisförmige untere Aussparung ist besonders geeignet, das Absenken einer zylindrischen becherförmigen Komponente zu ermöglichen. Die Form und Größe der unteren Aussparung entspricht vorzugsweise einem horizontalen Querschnitt der becherförmigen Komponente, die sich durch die Vorrichtung bewegt. Für eine rechteckige becherförmige Komponente kann eine rechteckig geformte untere Aussparung bevorzugt sein.

Im Sinne der Erfindung bezeichnet der Begriff "seitliche Aussparung" vorzugsweise eine Unterbrechung in der ersten Seitenwand des Kanals, wobei die Unterbrechung vorzugsweise für ein Abkippen und/oder eine seitliche Bewegung der becherförmigen Komponente konfiguriert ist.

Die seitliche Aussparung ist vorzugsweise so dimensioniert, dass sie einen kippenden Becher aufnehmen kann, dessen Öffnung nach unten und zur Innenseite des Kanals zeigt. Ein Querschnitt der seitlichen Aussparung entspricht vorzugsweise dem Querschnitt einer becherförmigen Komponente, insbesondere wenn diese abgesenkt und/oder gekippt ist. Es kann bevorzugt sein, dass der Querschnitt der seitlichen Aussparung größer als der Querschnitt der becherförmigen Komponente ist. Vorzugsweise beträgt eine Breite der seitlichen Aussparung 2 - 25 mm, bevorzugt 8 - 20 mm, noch bevorzugter ungefähr 12 mm. Vorzugsweise beträgt eine Höhe der seitlichen Aussparung 2 - 30 mm.

Die untere und seitliche Aussparung können die Form einer einzigen Unterbrechung haben, welche durch einen Teil der Kanalwand und den Kanalboden verläuft. Die Begriffe untere Aussparung und seitliche Aussparung können sich mithin auch auf Bereiche einer einzigen Aussparung beziehen.

In einer bevorzugten Ausführungsform der Erfindung definiert die Längsachse des Kanals eine Hauptfließrichtung der becherförmigen Komponenten. Im Sinne der Erfindung ist eine Hauptfließrichtung vorzugsweise die Richtung, in die sich die becherförmigen Komponenten bewegen, solange sie nicht aussortiert werden. Dies kann eine gerade Linie, eine Kurve, eine Spirale usw. sein, je nach der Form des Kanals. Bevorzugt ist die Hauptfließrichtung eine gerade Linie.

In einerweiteren bevorzugten Ausführungsform der Erfindung ist die untere Aussparung durch eine vordere Kante in Bezug auf die Hauptfließrichtung im Kanalboden begrenzt. Die vordere Kante befindet sich vorzugsweise stromabwärts der unteren Aussparung. Vorzugsweise bildet die vordere Kante einen stumpfen Winkel zur Hauptfließrichtung und ist dafür konfiguriert, ein Ausstoßen der becherförmigen Komponenten der seitlichen Ausrichtung entlang des Ausstoßpfades zu unterstützen.

Im Sinne der Erfindung bezeichnet der Begriff "stromabwärts" vorzugsweise die Richtung, die für die Durchströmung der becherförmigen Bauteile vorgesehen ist, insbesondere die Hauptfließrichtung. Vorzugsweise führt eine Stromaufwärtsrichtung von einem Eingang des Kanals zu einem Ausgang für sortierte becherförmige Komponenten. Eine stromabwärts der unteren Aussparung angeordnete vordere Kante ist bevorzugt so zu verstehen, dass eine entlang der Hauptfließrichtung fließende becherförmige Komponente erst nach Erreichen der unteren Aussparung die vordere Kante erreicht.

Im Sinne der Erfindung ist mit "stromaufwärts" vorzugsweise eine Richtung bezeichnet, die der beabsichtigten Fließrichtung der becherförmigen Komponenten durch die Vorrichtung entgegengesetzt ist. Die Position eines ersten Teils stromaufwärts von einem zweiten Teil bedeutet vorzugsweise, dass das erste Teil bei normalem Gebrauch der Vorrichtung zuerst von den becherförmigen Komponenten erreicht wird.

Wenn eine becherförmige Komponente in die untere Aussparung fällt und mit dem Sortierelement in Eingriff kommt, dient die vordere Kante vorzugsweise als Hindernis für ihre weitere Bewegung in der Hauptfließrichtung. Daher reichen kleine Aufwärtsbewegungen der becherförmigen Komponente, z.B. aufgrund von Vibrationen der Vorrichtung, vorzugsweise nicht aus, damit die becherförmige Komponente die vordere Kante überwinden kann. Stattdessen kann sich die becherförmige Komponente nur seitwärts und/oder diagonal entlang des Ausstoßpfades bewegen. Indem die vordere Kante der unteren Aussparung so angeordnet wird, dass sie einen stumpfen Winkel zur Hauptfließrichtung bildet, wird der Ausstoß der aussortierten becherförmigen Komponente weicher, ohne dass eine Beschädigung der Komponenten droht. Wenn die becherförmige Komponente durch ihre eigene Trägheit bewegt und/oder die Strömung weiterer becherförmiger Komponenten entlang des Kanals geschoben wird, fällt eine größere Komponente der Längsschiebekraft mit dem stumpfen Winkel der vorderen Kante zusammen, so dass die becherförmige Komponente leicht in Richtung der seitlichen Aussparung umgelenkt wird. Die Vorrichtung arbeitet effizient und reibungsarm.

In einer weiteren bevorzugten Ausführungsform der Erfindung bildet der durch die seitliche Aussparung definierte Ausstoßpfad einen Winkel zwischen 95° - 175°, besonders bevorzugt zwischen 110° - 160°, noch bevorzugter zwischen 120° - 150° zu der Hauptfließrichtung. Es wurde festgestellt, dass diese Winkel eine besonders weiche Umlenkung der becherförmigen Komponenten mit einer hohen Erfolgsrate der Aussortierung und geringem Verschleiß ermöglichen.

In einer weiteren bevorzugten Ausführungsform der Erfindung ist die vordere Kante als Fase mit abgeschrägter Fläche ausgebildet. Indem die vordere Kante als Fase ausgebildet ist, kann die Vorrichtung einen sanften Übergang von der unteren Aussparung zum Kanalboden unterstützen. So können becherförmige Komponenten mit ihrer Öffnung nach oben mit minimaler Reibung über die untere Aussparung, das Sortierelement und die vordere Kante fließen. Selbst wenn die becherförmigen Komponenten bei der Bewegung über die untere Aussparung leicht kippen oder absenken, können sie, solange sie nicht unter die unterste Stufe der Fase fallen, noch über die vordere Kante fließen und durch den Kanal an die Rundlaufpresse übergeben werden. Die becherförmigen Komponenten bleiben also nicht in der unteren Aussparung stecken. Die Reduzierung der scharfen Kanten, mit denen die becherförmigen Komponenten in Berührung kommen, verringert auch den Verschleiß, dem die Komponenten und die Vorrichtung ausgesetzt sind. Dadurch ist die Vorrichtung besonders langlebig und das Risiko von Verstopfungen und Beschädigungen wird verringert.

Im Sinne der Erfindung ist eine Fase vorzugsweise eine abgeschrägte Fläche eines sonst rechtwinkligen oder spitzwinkligen Bauteils. Vorzugsweise bildet die Fase zwei oder mehr stumpfe Winkel zu den angrenzenden Flächen des Bauteils, wobei die angrenzenden Flächen vorzugsweise in einem rechten oder spitzen Winkel zueinanderstehen.

Anstelle einer Fase kann auch eine abgerundete vordere Kante bevorzugt werden. Vorzugsweise hat die abgerundete Kante einen Radius von mindestens 0,05 mm, besonders bevorzugt von mindestens 0,1 mm.

In einer weiteren bevorzugten Ausführungsform der Erfindung ist die gewölbte Oberfläche des Sortierelements derart ausgestaltet, dass ein Eingriff zwischen einer becherförmigen Komponente in der zweiten Ausrichtung und dem Sortierelement ein Absenken der becherförmigen Komponente und eine Abwärtsneigung der becherförmigen Komponente in Richtung der ersten Seitenwand bewirkt. Indem das Sortierelement so geformt und/oder positioniert wird, dass es ein Absenken und Kippen der becherförmigen Komponenten mit einer nach unten gerichteten Öffnung (d.h. mit der unerwünschten Ausrichtung) bewirkt, werden diese becherförmigen Komponenten daran gehindert, sich weiter durch den Kanal in der Hauptfließrichtung zu bewegen. Beim Absenken fällt eine Unterkante der becherförmigen Komponenten unter die Position der vorderen Kante. Dadurch stößt eine Mantelfläche oder eine Grundfläche der becherförmigen Komponente beim Vorwärtsschieben mit der vorderen Kante zusammen. Durch zusätzliches Kippen, zum Beispiel entlang der Wölbung der gewölbten Oberfläche des Sortierelementes, wird eine Unterkante der becherförmigen Komponente noch tiefer unter das Niveau der vorderen Kante gebracht, so dass eine weitere Bewegung in der Hauptfließrichtung blockiert wird. Stattdessen kann sich die becherförmige Komponente nur seitwärts oder diagonal in die seitliche Aussparung bewegen. Ein zuverlässiges Aussortieren der becherförmigen Komponente wird mit einfachen Mitteln erreicht.

Vorzugsweise beträgt das Absenken der becherförmigen Komponenten 0,5 - 3 mm, besonders bevorzugt 1 - 2 mm. Vorteilhaft kann ein Absenken einer solchen Höhe eine zuverlässige Aussortierung der becherförmigen Komponenten der unerwünschten Ausrichtung trotz Vibrationen in der Vorrichtung ermöglichen. Gleichzeitig können becherförmige Komponenten der erwünschten Ausrichtung weiterhin über das Sortierelement und die vordere Kante fließen, ohne ungewollt abzusenken.

In einer weiteren bevorzugten Ausführungsform der Erfindung ist die seitliche Aussparung durch eine obere Kante in der ersten Seitenwand des Kanals begrenzt. Durch die Begrenzung der seitlichen Aussparung durch eine obere Kante kann die Höhe der Aussparung derart fein eingestellt werden, dass nur becherförmige Komponenten der unerwünschten Ausrichtung aus dem Kanal entweichen können. Die obere Kante kann vorteilhafterweise becherförmige Komponenten der erwünschten Ausrichtung daran hindern, versehentlich zu entweichen, so dass sie wie ein Filter wirkt.

Eine "obere Kante" im Sinne der Erfindung ist vorzugsweise einen Abschnitt einer Seitenwand des Kanals, welcher die seitliche Aussparung von oben abgrenzt.

Vorzugsweise ist die obere Kante dazu eingerichtet, einen Ausstoß der becherförmigen Komponenten der erwünschten Ausrichtung aus der seitlichen Aussparung zu verhindern und deren Bewegung entlang einer Längsachse des Kanals zu unterstützen. Besonders bevorzugt liegt eine Höhenposition der oberen Kante zwischen der maximalen Höhenposition einer abgesenkten und/oder abgeneigten becherförmigen Komponente, die mit dem Sortierelement in Eingriff gekommen ist und der maximalen Höhenposition einer becherförmigen Komponente, die nicht mit dem Sortierelement in Eingriff gekommen ist. Auf diese Weise kann die Zuverlässigkeit der Vorrichtung durch einfache Mittel weiter verbessert werden. Die Vorrichtung ist daher vorteilhaft langlebig und leicht zu bedienen.

In einer weiteren bevorzugten Ausführungsform der Erfindung beträgt eine Höhe der oberen Kante zwischen 0,5 mm und 3 mm, vorzugsweise zwischen 1 mm und 2 mm. Eine solche Höhe kann ein unerwünschtes Entweichen der becherförmigen Komponenten zuverlässig verhindern. Die Höhe der oberen Kante ist vorzugsweise der Abstand von ihrer untersten Fläche zur Oberseite der ersten Seitenwand und/oder zur Kanaldecke.

In einer weiteren bevorzugten Ausführungsform der Erfindung beträgt das Verhältnis zwischen der maximalen Höhe der becherförmigen Komponente und ihrer Breite mindestens 1:1. Noch bevorzugter ist das Verhältnis der maximalen Höhe der becherförmigen Komponente zu ihrer Breite mindestens 1:1,5, 1:2, 1:3 oder mehr. Im Falle einer zylindrischen becherförmigen Komponente ist der Durchmesser des Zylinders die Breite.

In einer weiteren bevorzugten Ausführungsform der Erfindung ist die becherförmige Komponente zylinderförmig und hat einen Durchmesser zwischen 2 - 20 mm, vorzugsweise zwischen 5 - 15 mm, noch bevorzugter zwischen 8 - 13 mm.

In einer weiteren bevorzugten Ausführungsform der Erfindung ist ein oberster Punkt der gewölbten Oberfläche des Sortierelements zu einer Oberfläche des Kanalbodens innerhalb eines Toleranzbereichs von ± 10 mm, vorzugsweise ± 5 mm, besonders bevorzugt ± 3 mm, ± 1 mm, ± 0,5 mm oder noch bevorzugter ± 0,2 mm ausgerichtet. Durch die Anpassung einer Höhenposition des Sortierelementes an die Höhenposition des Kanalbodens kann ein Kippen der becherförmigen Komponenten der gewünschten ersten Ausrichtung vermieden werden. Denn die becherförmigen Komponenten können vorzugsweise gleichzeitig mit dem Kanalboden und mit dem Sortierelement in Kontakt sein, ohne dass ein signifikanter Höhenunterschied über die Länge der becherförmigen Komponente besteht. Es wird somit vermieden, dass die becherförmigen Komponenten der gewünschten Ausrichtung durch eine vordere Kante der unteren Aussparung daran gehindert werden, ihre Bewegung durch den Kanal fortzusetzen.

In einer weiteren bevorzugten Ausführungsform der Erfindung entspricht die gewölbte Oberfläche des Sortierelements einer Oberfläche eines Rotationsellipsoids, bevorzugt einer Kugel. Die Form des Rotationsellipsoids, insbesondere eine Kugel, erweist sich als besonders vorteilhaft, um einen ausreichenden Eingriff in die Öffnung der becherförmigen Komponente und ein ausreichendes Kippen zu gewährleisten, ohne zu riskieren, dass die becherförmige Komponente am Sortierelement hängen bleibt. Es kann auch bevorzugt sein, dass die Form des Sortierelements nur einem Teil einer Kugel entspricht, zum Beispiel mindestens dem oberen Drittel einer Kugel. Auf diese Weise kann eine besonders kompakte Vorrichtung bereitgestellt werden.

Im Sinne der Erfindung ist ein Radius der gewölbten Oberfläche vorzugsweise der Radius eines Kreisbogens, der die gewölbte Oberfläche in einer bestimmten Ebene am besten approximiert. Vorzugsweise wird der Radius der gewölbten Oberfläche in einer vertikalen Ebene gemessen, insbesondere in einer vertikalen Ebene, die mit der Längsachse des Kanals zusammenfällt. Der Kreisbogen entspricht vorzugsweise einem Abschnitt der gewölbten Oberfläche, der mit einer becherförmigen Komponente in Eingriff kommen kann. Im Sinne der Erfindung kann eine gewölbte Oberfläche durch eine einzige ununterbrochene, winkelfreie Fläche gebildet werden. Sie kann aber auch aus einer Vielzahl von ebenen oder gewölbten Oberflächen bestehen, die in stumpfen Winkeln zueinander angeordnet sind, um eine Kurve zu approximieren.

Vorzugsweise beträgt ein Radius der gewölbten Oberfläche mindestens das 0,5-Fache, vorzugsweise das 0,5 - 4-Fache, noch bevorzugter das 0,75 - 2-Fache einer maximalen Ausdehnung der Öffnung der becherförmigen Komponente.

Die Parameterbereiche erlauben eine besonders effektive Sortierung. Je kleiner der Radius der gewölbten Oberfläche ist desto stärker fällt das Absenken der becherförmigen, wodurch ein zuverlässiger Eingriff erreicht wird. Anderseits erhöht sich hierdurch die Kontaktfläche jener Becher, welche in einen Eingriff mit dem Sortierelement kommen, wodurch ein Kippen entlang des Ausstoßpfades erschwert werden kann. Die vorgenannten Parameter haben sich als ein Optimum erwiesen.

In einer weiteren bevorzugten Ausführungsform der Erfindung hat das Sortierelement die Form eines Rotationsellipsoids mit einem durchschnittlichen horizontalen Durchmesser von mindestens 8 mm, vorzugsweise mindestens 12 mm, besonders bevorzugt mindestens 15 mm. Vorzugsweise ist das Sortierelement achsensymmetrisch, sodass der horizontale Durchmesser winkelunabhängig ist.

Im Sinne der Erfindung ist eine vertikale Ebene vorzugsweise eine Ebene, die durch die Richtung der Schwerkraft definiert ist. Eine vertikale Richtung, Entfernung oder Ausdehnung befindet sich vorzugsweise in der vertikalen Ebene. Eine horizontale Ebene ist vorzugsweise orthogonal zur Richtung der Schwerkraft.

In einer weiteren bevorzugten Ausführungsform der Erfindung umfasst der Kanal eine Decke.

Die Bereitstellung einer Kanaldecke unterstützt das Halten der becherförmigen Komponenten innerhalb des Kanals in vertikaler Richtung. Insbesondere werden vorteilhaft auch bei hohen Transportgeschwindigkeiten eine Aufwärtsbewegung oder Verkippen vermieden. Stattdessen führt ein Schieben einer becherförmigen Komponente, die mit dem Sortierelement in Eingriff gekommen ist, zuverlässig zu einer Bewegung in Richtung des seitlichen Ausstoßpfads.

In einer bevorzugten Ausführungsform der Erfindung umfasst die Decke des Kanals einen Längsschlitz. Vorzugsweise ist der Längsschlitz dafür konfiguriert, einen Eingriff in die Bewegung der becherförmigen Komponenten zu ermöglichen, insbesondere ein manuelles Verschieben einer eingeklemmten Komponente.

Außerdem kann durch die Ausstattung der Kanaldecke mit einem Schlitz eine optische Inspektion des Kanals, z.B. auf Ablagerungen, Beschädigungen oder ähnliches, ohne Demontage durchgeführt werden. Darüber hinaus lassen sich festgestellte Verstopfungen sehr leicht beseitigen, indem man ein geeignetes Werkzeug durch den Schlitz führt. Die Vorrichtung ist also nicht nur langlebig und relativ verschleißfrei, sondern auch sehr leicht zu warten.

In einer weiteren bevorzugten Ausführungsform der Erfindung weist der Kanal im Bereich des Sortierelements eine Zug- oder Druckvorrichtung auf. Die Zug- oder Druckvorrichtung ist vorzugsweise ein Druckluftausstoßer, eine Saugeinheit und/oder ein Elektromagnet. Vorzugsweise ist die Zug- oder Druckvorrichtung dafür konfiguriert, dass die becherförmigen Komponenten eine Vorspannkraft in Richtung des Ausstoßpfades und/oder zur Seitenwand mit der seitlichen Aussparung zum Ausstoßen der becherförmigen Komponenten erfahren. Es kann bevorzugt sein, dass diese Vorspannkraft nur in einem Bereich der seitlichen Aussparung angewendet wird. Durch das Vorspannen der fließenden becherförmigen Komponenten in Richtung der ersten Seitenwand kann deren Kippen in Richtung der Seitenwand unterstützt werden. Vorzugsweise können aufgrund der Geometrie der Vorrichtung nur becherförmige Komponenten der unerwünschten Ausrichtung, die in die untere Aussparung absenken, zur Seitenwand gekippt werden. Insbesondere bei höheren Fließgeschwindigkeiten, beispielsweise von mindestens 200 Bechern/min, vorzugsweise mindestens 300 Bechern/min, noch bevorzugter von mindestens 400 Bechern/min, besteht die Gefahr, dass sie aufgrund der auf die Becher entlang der Hauptfließrichtung wirkenden Kräfte und ihrer Geschwindigkeit nicht ausreichend tief in die untere Aussparung absenken, wenn sie das Sortierelement passieren. Insofern besteht bei hohen Geschwindigkeiten ein Risiko, dass die becherförmigen Komponenten nicht ausreichend mit dem Sortierelement in Eingriff kommen und/oder zu wenig Zeit haben, seitlich in Richtung Ausstoßpfad zu gleiten. Die Anwendung einer seitlichen Vorspannkraft kann dieses Risiko minimieren bzw. beseitigen, so dass die Vorrichtung die becherförmigen Komponenten der unerwünschten Ausrichtung auch bei sehr hohen Strömungsgeschwindigkeiten zuverlässig aussortieren kann.

In einer bevorzugten Ausführungsform der Vorrichtung, ist eine Vielzahl von becherförmigen Komponenten als Bestandteil der Vorrichtung zu betrachten. Eine oder mehrere becherförmigen Komponenten befinden sich vorzugsweise im Kanal.

In einer weiteren bevorzugten Ausführungsform der Vorrichtung, ist der Kanal mit einer Zuführeinheit verbunden, wobei die Zuführeinheit eine Vielzahl von becherförmigen Komponenten umfasst.

In einem weiteren Aspekt betrifft die Erfindung ein Kit umfassend eine beschriebene Vorrichtung und eine Vielzahl von becherförmigen Komponenten. Die Vorrichtung ist dafür konfiguriert, die Vielzahl von becherförmigen Komponenten gemäß ihren Ausrichtungen zu sortieren. Die relativen Größen der Vorrichtung und der becherförmigen Komponenten sind vorzugsweise wie oben in den bevorzugten Ausführungsformen der Vorrichtung dargelegt.

Ein Querschnitt des Kanals der Vorrichtung ist vorzugsweise an einen Querschnitt der becherförmigen Komponenten angepasst. Das Sortierelement der Vorrichtung hat vorzugsweise eine gewölbte Oberfläche mit einem Wölbungsradius, der mindestens einem Radius eines horizontalen Querschnitts der becherförmigen Komponenten entspricht. Der Wölbungsradius steht vorzugsweise in einem relativen Größenverhältnis zu einem Radius der becherförmigen Komponenten, wobei das Größenverhältnis wie oben für die Vorrichtung dargelegt ist.

In einem weiteren Aspekt betrifft die Erfindung ein System umfassend eine erfindungsgemäße Vorrichtung wie oben beschrieben, eine Zuführeinheit becherförmiger Komponenten stromaufwärts der Vorrichtung, eine Einlegeeinheit stromabwärts der Vorrichtung und eine Rundlaufpresse mit mehreren Matrizen.

Die Einlegeeinheit ist dafür konfiguriert, becherförmige Komponenten in der gewünschten Ausrichtung einzeln von der Vorrichtung zu den Matrizen der Rundlaufpresse zu überführen. Die Rundlaufpresse ist dafür ausgelegt, ein Pressgut in die becherförmigen Komponenten zu verpressen.

Ein solches System kann becherförmige Komponenten an eine Rundlaufpresse liefern, ohne viel Platz einzunehmen und ohne die becherförmigen Komponenten zu beschädigen oder zu verunreinigen. Da die Sortiervorrichtung zwischen einer Zuführeinheit für becherförmige Komponenten und der Rundlaufpresse angebracht ist, kann sie Teil einer Verbindung zwischen diesen beiden Vorrichtungen sein, die sehr wenig Platz beansprucht. Der Weg, den die becherförmigen Komponenten zurücklegen müssen, um ihren Platz in der Rundlaufpresse zu erreichen, kann ebenfalls sehr kurzgehalten werden. Dadurch verringert sich das Risiko einer Oberflächenbeschädigung der becherförmigen Komponenten, in denen sich dann Verunreinigungen ansammeln können.

Durch das Vorhandensein der Einlegeeinheit können die becherförmigen Komponenten direkt und einzeln von der Sortiervorrichtung in die Matrizen der Rundlaufpresse zum Befüllen und Pressen übergeben werden. Mehrkomponententabletten können so mit geringem Kontaminationsrisiko und hoher Qualität hergestellt werden. Das System kann sehr kompakt gehalten werden, umfasst einfache Mittel und ist einfach zu reinigen und zu warten. Da die Sortiervorrichtung sehr zuverlässig ist und mit hohen Durchflussgeschwindigkeiten von Bechern arbeiten kann, kann das System eine große Anzahl von Multikomponententabletten pro Minute mit einer sehr niedrigen Ausfallrate produzieren. Es ist außerdem von Vorteil, dass die Sortiervorrichtung bei praktisch jeder Produktionsrate des Systems automatisiert arbeiten kann. Das liegt insbesondere daran, dass für die Sortierung hauptsächlich statische, mechanische Komponenten verwendet werden, die keinen komplexen Steuerungsmechanismus erfordern.

Das erfindungsgemäße System ist besonders vorteilhaft für die Herstellung von Knopfzellen. Solche Knopfzellen bestehen in der Regel aus runden, flachen Bechern mit einem viel größeren Durchmesser im Vergleich zu ihrer Höhe. Außerdem haben die runden, flachen Becher in der Regel einen im Wesentlichen identischen Querschnitt sowohl in der ersten (erwünschten) als auch in der zweiten (unerwünschten) Ausrichtung. Das System kann solche Knopfzellen mit einer sehr hohen Rate und hoher Zuverlässigkeit herstellen. Insbesondere im Vergleich zum Stand der Technik kann die Sortierung der Knopfzellen bei hohen Geschwindigkeiten erfolgen und ist besonders geeignet für den relativ mittigen Schwerpunkt der Knopfzellen.

In einer bevorzugten Ausführungsform der Erfindung umfasst die Einlegeeinheit eine Übernahme- und Übergabevorrichtung für die becherförmigen Komponenten, welche vorzugsweise als ein Drehkreuz mit Greifarmen ausgestaltet ist. Diese erlauben eine präzise Positionierung der Becher in die Matrizen der Rundlaufpresse. Insbesondere kann ein kreisförmiger Bahnverlauf der Greifarme so gestaltet werden, dass er sowohl einen Kanal schneidet, der/die die ausgerichteten becherförmigen Komponenten zuführt, als auch einen kreisförmigen Bahnverlauf der Matrizen schneidet. Mechanische, elektromagnetische, pneumatische oder hydraulische Mittel können zum Anheben und/oder Ablegen der becherförmigen Komponenten eingesetzt werden. Auf diese Weise wird eine sehr zuverlässige Platzierung der Becher in den Matrizen erreicht. Vorteilhafterweise können auch andere aus dem Stand der Technik bekannte Vorrichtungen zum Einlegen der Becher mit der Rundlaufpresse kombiniert werden.

In einer weiteren bevorzugten Ausführungsform der Erfindung umfasst das System eine Rückführeinheit zur Rückführung der ausgestoßenen becherförmigen Komponenten aus der Sortiervorrichtung in die Zuführeinheit der zufällig ausgerichteten becherförmigen Komponenten. So können sich die becherförmigen Komponenten durch das System bewegen, ohne mit der Umgebungsluft in Berührung zu kommen. Das Risiko einer Verunreinigung, z.B. durch Staub, wird reduziert.

Es kann bevorzugt sein, dass der Kanal der Sortiervorrichtung oder die Rückführeinheit in einer Stromabwärtsrichtung zum Boden hingeneigt ist. Vorzugsweise beträgt die Neigung mindestens 2°, noch bevorzugter mindestens 5°, besonders bevorzugt mindestens 7°. Auf diese Weise kann die Bewegung der becherförmigen Komponenten durch die Schwerkraft unterstützt und ein Trägheitsverlust aufgrund von Reibung ausgeglichen werden.

In einer weiteren bevorzugten Ausführungsform der Erfindung ist die Rundlaufpresse zum Ausführen von mindestens einem Pressvorgang während eines Rundlaufes der Rundlaufpresse ausgestaltet. Die Rundlaufpresse umfasst vorzugsweise einen Rotor, eine Matrizenscheibe mit den Matrizen, eine Oberstempelführung zur Aufnahme von Oberstempeln und eine Unterstempelführung zur Aufnahme von Unterstempeln.

In einer Ausführungsform kann es bevorzugt sein, dass der mindestens eine Pressvorgang ein Einpressen einer Tablette in die eingelegten becherförmigen Komponenten meint. Zu diesem Zweck können die becherförmigen Komponenten zunächst in die Matrizen eingelegt und von den Unterstempeln gehalten werden. Bereits vorgepresste Tabletten können im Anschluss in die becherförmigen Komponenten eingelegt werden, welche sich bereits in den Matrizen der Rundlaufpresse befinden. Durch ein Zusammenwirken von Ober- und Unterstempel kann die Tablette in die becherförmigen Komponenten verpresst werden.

Ebenso kann es bevorzugt sein, dass die Rundlaufpresse eine Füllstation aufweist mit der Pressgut unmittelbar in die becherförmigen Komponenten gefüllt und verpresst werden kann. Die Matrizen sind zu diesem Zweck mit den Ober- und Unterstempeln ausgerichtet, so dass in einem Rundlauf der Rundlaufpresse eine becherförmige Komponente mit der Öffnung nach oben in eine Matrize eingebracht, mit Pressgut gefüllt und verpresst werden kann.

In einer weiteren bevorzugten Ausführungsform der Erfindung ist die Rundlaufpresse dazu eingerichtet, im selben Rundlauf Tabletten aus einem Pulver zu pressen, die Tabletten in korrekt ausgerichtete Becher einzulegen und die Tabletten in den Boden der Becher zu drücken bzw. einzupressen. Eine solche Konfiguration ist platzsparend und kann Mehrkomponententabletten, insbesondere Knopfzellen, zuverlässig in hohen Raten produzieren. Eine derartige Rundlaufpresse ist beispielsweise aus der WO 2017/162848 A1 bekannt auf deren Ausführungen insofern verwiesen wird.

Bevorzugt ist die Rundlaufpresse zum Ausführen von mindestens zwei Pressvorgängen während eines Rundlaufes der Rundlaufpresse konfiguriert. Die Rundlaufpresse umfasst zu diesem Zweck vorzugsweise einen Rotor, eine Matrizenscheibe, eine Oberstempelführung zur Aufnahme von Oberstempeln und eine Unterstempelführung zur Aufnahme von Unterstempeln, wobei die Oberstempeln mindestens zwei Oberstempelspitzen aufweisen, wobei eine erste Oberstempelspitze eine um eine Längendifferenz (L_{D1}) kleinere Länge aufweist als eine zweite Oberstempelspitze und die Unterstempel mindestens zwei Unterstempelspitzen aufweisen, wobei eine erste Unterstempelspitze eine um die Längendifferenz (L_{D2}) größere Länge aufweist als eine zweite Unterstempelspitze, die Matrizenscheibe erste Matrizenhohlräume aufweist, welche zu den ersten Ober- und Unterstempelspitzen hin ausgerichtet sind, so dass in einem ersten Pressvorgang ein erstes Pressgut in den ersten Matrizenhohlräumen und in einem zweiten Pressvorgang ein zweites Pressgut in den zweiten Matrizenhohlräumen während eines Rundlaufes verpresst werden kann. Wie in der WO 2017/162848 A1 in Bezug auf eine Herstellung von Knopfzellen ausgeführt, kann es bevorzugt sein zunächst die Becher in die zweiten Matrizenhohlräume einzulegen. Bei einem ersten Pressvorgang wird eine Tablette in den ersten Matrizenhohlräumen verpresst. Die Tablette kann mittels einer Transportvorrichtung, beispielsweise einem Drehkreuz, im Anschluss in die zweiten Matrizenhohlräume transportiert werden, in den sich bereits die Becher befinden. In einem zweiten Pressvorgang wird die eingelegte Tablette in die Becher verpresst bzw. eingedrückt.

In einem weiteren Aspekt betrifft die Erfindung ein Verfahren zum Zuführen vereinzelter ausgerichteter becherförmiger Komponenten in Matrizen einer Rundlaufpresse. Das Verfahren umfasst vorzugsweise die folgenden Schritte:
- Zuführung von becherförmigen Komponenten in eine erfindungsgemäße Sortiervorrichtung wie oben beschrieben,
- Ausstoß der becherförmigen Komponenten der zweiten Ausrichtung aus der seitlichen Aussparung der Vorrichtung,
- Vereinzelte Einlegung der becherförmigen Komponenten der ersten Ausrichtung in Matrizen einer Rundlaufpresse mittels einer Einlegeeinheit.

Ein solches Verfahren ermöglicht die zuverlässige Herstellung von Mehrkomponententabletten, insbesondere der Kathoden von Knopfzellen oder der Knopfzellen selbst bei sehr hohen Raten. Das Verfahren eignet sich auch für einen hohen Grad an Automatisierung. Durch die Verwendung der erfindungsgemäßen Sortiervorrichtung sind die becherförmigen Komponenten nur sehr geringen Verunreinigungen und Reibungen ausgesetzt. Die produzierten Multikomponententabletten haben daher eine sehr hohe Qualität.

In einer bevorzugten Ausführungsform der Erfindung werden die ausgestoßenen becherförmigen Komponenten wieder in die erfindungsgemäße Sortiervorrichtung zugeführt.

In einem weiteren Aspekt betrifft die Erfindung eine Verwendung der Sortiervorrichtung zum Sortieren becherförmiger Komponenten.

Der Fachmann erkennt, dass bevorzugte Merkmale bzw. Vorteile von Ausführungsformen der erfindungsgemäßen Vorrichtung, ebenso für eine Verwendung der Vorrichtung und Ausführungsformen eines Kits, eines Systems oder eines Verfahrens gelten, in dem die Vorrichtung Verwendung findet, und umgekehrt.

Begriffe wie im Wesentlichen, ungefähr, etwa, ca., usw. beschreiben vorzugsweise einen Toleranzbereich von weniger als ± 20 %, vorzugsweise weniger als ± 10 %, besonders bevorzugt weniger als ± 5 % und insbesondere weniger als ± 1 % und schließen den genauen Wert ein.

Im Folgenden soll die Erfindung anhand von Beispielen näher erläutert werden, ohne auf diese beschränkt zu sein.

### Kurzbeschreibung der Abbildungen

- Fig. 1: Schematische Draufsicht auf eine Vorrichtung gemäß einer bevorzugten Ausführungsform der Erfindung, welche eine Hauptfließrichtung und einen schrägen Ausstoßpfad zeigt.
- Fig. 2: Schematische Abbildung eines Längsschnittes durch den Kanal einer Vorrichtung gemäß der bevorzugten Ausführungsform der Erfindung, bei der ein Becher der zweiten (ungewünschten) Ausrichtung mit einem Sortierelement in Eingriff kommt.
- Fig. 3: Schematische Abbildung eines Längsschnittes durch den Kanal, bei der der Becher mithilfe des Sortierelements in Richtung des Ausstoßpfades abgeneigt wird.
- Fig. 4: Schematische Abbildung eines Querschnittes durch den Kanal, bei der der Becher mit dem Sortierelement in Eingriff kommt.
- Fig. 5: Schematische Abbildung eines Querschnittes durch den Kanal, bei der der Becher mithilfe des Sortierelements in Richtung des Ausstoßpfades abgeneigt wird und über die gewölbte Oberfläche in den Ausstoßpfad rutscht.
- Fig. 6: Schematische Abbildung eines Längsschnittes durch den Kanal einer Vorrichtung gemäß derselben bevorzugten Ausführungsform wie Fig. 2, bei der ein Becher der ersten Ausrichtung über das Sortierelement gleitet, ohne aussortiert zu werden.
- Fig. 7: Schematische Abbildung eines Längsschnittes durch den Kanal, bei der das Becher die Fase der vorderen Kante erreicht.
- Fig. 8: Schematische Abbildung eines Querschnittes durch den Kanal, wobei ein Becher der ersten (erwünschten) Ausrichtung über das Sortierelement gleitet und durch die obere Kante in dem Kanal gefangen wird.
- Fig. 9: Schematische Abbildung der Vorrichtung, wobei das Sortierelement die Form einer Kugel aufweist.
- Fig. 10: Schematische perspektivische Draufsicht auf die Vorrichtung, welche eine Mehrzahl fließender Becher zeigt, wobei ein Becher dabei ist, in Richtung der seitlichen Aussparung zu kippen.
- Fig. 11: Schematische perspektivische Draufsicht auf ein System gemäß einer bevorzugten Ausführungsform der Erfindung, wobei eine erfindungsgemäße Vorrichtung zwischen einer Zuführeinheit becherförmiger Komponenten und einer Einlegeeinheit einer Rundlaufpresse zwischengeschaltet ist.

### Detaillierte Beschreibung der Abbildungen

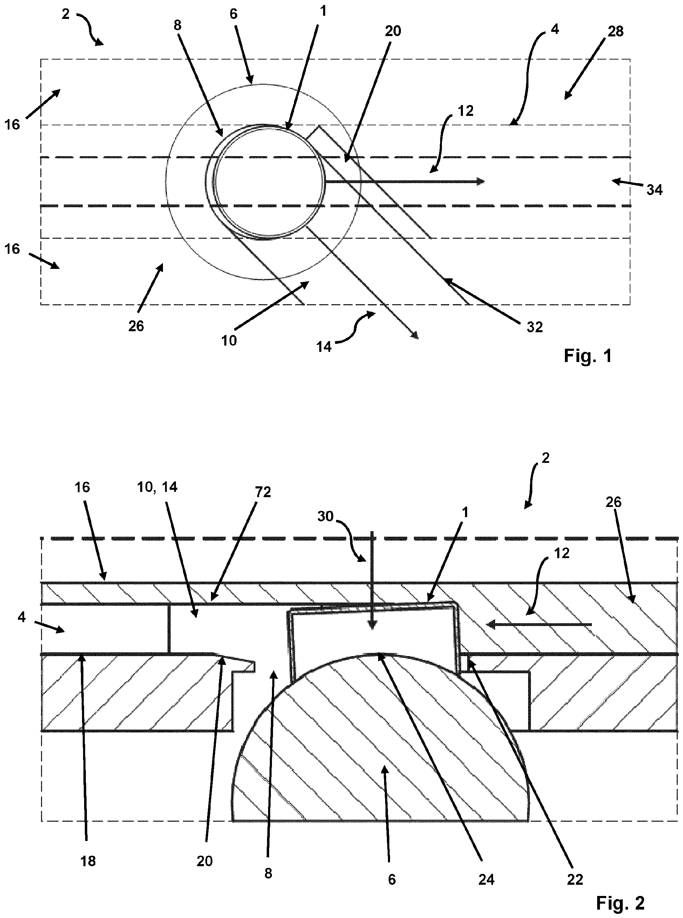

Fig. 1 zeigt eine schematische Draufsicht einer Vorrichtung **2** gemäß einer bevorzugten Ausführungsform der Erfindung. Die Figur zeigt einen Becher **1,** der über das Sortierelement **6** fließt. In dieser Ansicht ist deutlich zu erkennen, dass das Sortierelement **6** einen größeren Radius hat als der Becher **1** aufweist. Konkret hat der Becher **1** dieser Ausführungsform einen Radius von 5,5 mm (einen Durchmesser von 11 mm), während die gewölbte Oberfläche **24** des Sortierelements **6** einen konstanten Radius von 10 mm in alle Richtungen hat. Die Figur zeigt auch eine Hauptfließrichtung **12** und einen Ausstoßpfad **14,** wobei der Ausstoßpfad einen stumpfen Winkel zur Hauptfließrichtung **12** bildet. Der Ausstoßpfad **14** wird durch die seitliche Aussparung **10** in der ersten Seitenwand **26** des Kanals **4** begrenzt. Die Dicke der Seitenwand **26** ist durch die dünnen gestrichelten Linien gekennzeichnet. Wie in der Figur zu sehen ist, ist die Wand ausreichend dick, um einen schrägen Pfad zu definieren, der ungefähr den gesamten Durchmesser des Bechers **1** überspannt. Wie ebenfalls zu sehen ist, ist eine Wand **32** der seitlichen Aussparung **10** durchgehend mit der vorderen Kante **20,** die beide schräg zur Hauptfließrichtung angeordnet sind.

Ein vorderer Teil der unteren Aussparung **8** wird durch eine vordere Kante **20** begrenzt, welche den Ausstoßpfad **14** definiert.

Die seitliche Aussparung **10** ist mit der unteren Aussparung **8** kontinuierlich. Der Kanal **4** umfasst auch eine Kanaldecke **16,** die durch einen Schlitz **34** unterbrochen ist, welcher durch dicke gestrichelte Linien dargestellt ist. Durch den Schlitz **34** kann ein externes Werkzeug in den Kanal **4** eingeführt werden, zum Beispiel um Verstopfungen zu beseitigen.

Die Fig. 2 - 5 zeigen unterschiedliche Ansichten und Stadien der Bewegung eines Bechers 1 in der zweiten (unerwünschten) Ausrichtung entlang des Kanals **4** und des Ausstoßpfades **14.**

Fig. 2 zeigt einen Längsschnitt durch den Kanal **4** der Vorrichtung **2.** Der Kanal **4** umfasst den Kanalboden **18** und definiert durch seine Langsachse eine Hauptfließrichtung **12** der Becher **1.** Außerdem sind eine Kanaldecke **16** und eine erste Seitenwand **26** in der Figur zu erkennen. In einer unteren Aussparung **8** im Kanalboden **18** wird das Sortierelement **6** unterbracht. Bei dieser Ausführungsform hat das Sortierelement **6** die Form einer Kugel mit einem Radius, der - wie oben für Fig. 1 dargelegt - ungefähr dem Durchmesser einer Becheröffnung entspricht. Das Sortierelement **6** ist so untergebracht, dass während des Sortierelements statisch bleibt. Das heißt, das Sortierelement ist so gelagert, dass er sich in der unteren Aussparung **8** nicht dreht.

Wie durch den Pfeil **12** gezeigt, fließen die Becher **1** von rechts nach links durch den Kanal **4** bis sie in Kontakt mit einer gewölbten Oberfläche **24** des Sortierelements **6** kommen und im Anschluss den Kontakt mit dem Kanalboden **18** verlieren. In dieser Ausführungsform fallen die Becher **1** der zweiten (unerwünschten) Ausrichtung leicht bzw. erfahren eine Absenkung, sobald sie eine hintere Kante **22** der ersten Aussparung komplett passieren. Die hintere Kante **22** ist vorzugsweise orthogonal zum Kanalboden **18.** Der Pfeil **30** zeigt schematisch das Absenken des Bechers **1** beim Eingriff mit dem Sortierelement an. Wie auch in späteren Figuren dargestellt wird, kippt der Becher **1** im Anschluss in Richtung einer seitlichen Aussparung **10** und verlässt den Kanal **4** über einen Ausstoßpfad **14.**

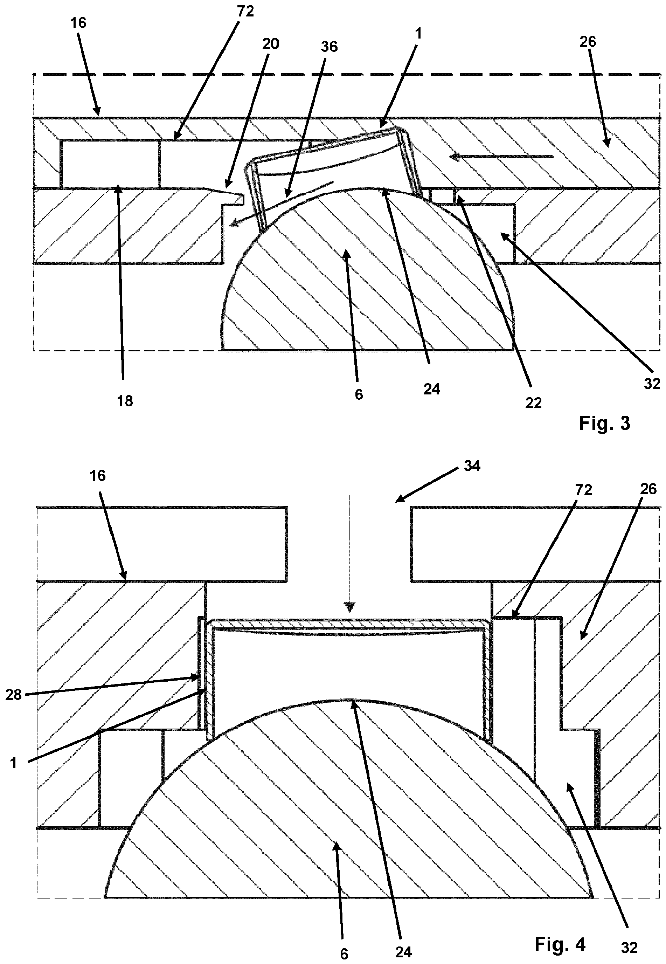

Fig. 3 zeigt einen Längsschnitt durch den Kanal **4** in einem Zustand, der chronologisch an den von Fig 2 anschließt. Der Becher **1,** der von seiner Position auf dem Kanalboden **18** auf eine tiefere Position auf dem Sortierelement **6** gefallen ist, beginnt in Richtung des Ausstoßpfads **14** zu kippen. Da der Ausstoßpfad **14** einen stumpfen Winkel zur Längsachse des Kanals bildet und das Kippen durch die Richtung der vorderen Kante **20** und die Wände des Ausstoßpfads **14** gelenkt wird, hat das Kippen sowohl eine deutliche Längskomponente, wie der vom Becher **1** nach unten zeigende Pfeil **36** zeigt, als auch eine Querkomponente. Der Becher **1** gleitet entlang der gewölbten

Oberfläche **24** des Sortierelements **6,** um den Kanal **4** durch die seitliche Aussparung **10** zu verlassen. Wie in Fig. 3 gezeigt, umfasst die erste Seitenwand **26** eine obere Kante **72,** unter die der gekippte Becher **1** fällt, um aus dem Kanal **4** zu entkommen.

Fig. 4 zeigt einen Querschnitt durch den Kanal **4** in demselben Zustand wie bei Fig. 2. Wie in dieser Ansicht deutlicher zu erkennen ist, umfasst die Kanaldecke **16** einen Längsschlitz **34,** der einen einfachen Zugang zum Inneren des Kanals **4** ermöglicht. Der Querschnitt des Kanals **4** ist eng an den Querschnitt des Bechers **1** angepasst, der den Querschnitt des Kanals im Wesentlichen ausfüllt, wenn er sich in die Hauptfließrichtung bewegt. Ein Abstand zwischen dem Becher 1 und den inneren Wänden **16, 18, 26, 28** des Kanals von weniger als 0,5 mm in jeder der seitlichen und vertikalen Richtungen kann vorgesehen werden.

Die Seitenwand **26** umfasst die seitliche Aussparung **10** im Bereich des Sortierelementes **6.** Der diagonale Ausstoßpfad **14** wird durch zwei parallele Wände **32** in der ersten Seitenwand **26** abgegrenzt. Die Seitenwand **26** umfasst auch eine obere Kante **72.**

Wie auch in dieser Ansicht deutlicher zu sehen ist, fällt der Becher **1** mit seiner Öffnung nach unten in die untere Aussparung **8.** Der nach unten gerichtete Pfeil zeigt das Absenken des Bechers **1** an. Als der Becher **1** fällt, greift er in das Sortierelement **6** ein, wobei die gewölbte Oberfläche **24** des Sortierelements **6** teilweise in die Öffnung des Bechers **1** eindringt. Das Ausmaß des Absenkens ist mindestens so groß, dass der Becher **1** die obere Kante **72** gerade noch passiert. Das Ausmaß des Absenkens kann zum Beispiel mindestens so groß sein wie der vertikale Abstand zwischen der Kanaldecke **16** und der oberen Kante **72,** insbesondere wenn die Höhe der Kanaldecke **16** an die Höhe des Bechers **1** angepasst ist. Sollte zwischen dem Becher und der Höhe der Kanaldecke **16** ein Spielraum bestehen, ist das Absenken des Bechers **1** vorzugsweise auch ausreichend, um auch diesen Spielraum zu passieren.

Aufgrund seiner abgesenkten Position in der unteren Aussparung **8,** kann der Becher **1** in Richtung der ersten Seitenwand **26** kippen. Dies wird insbesondere durch Unterschreiten der oberen Kante **72** und Erzeugen eines zusätzlichen Abstands zur Kanaldecke **16** neben der zweiten Seitenwand **28** ermöglicht.

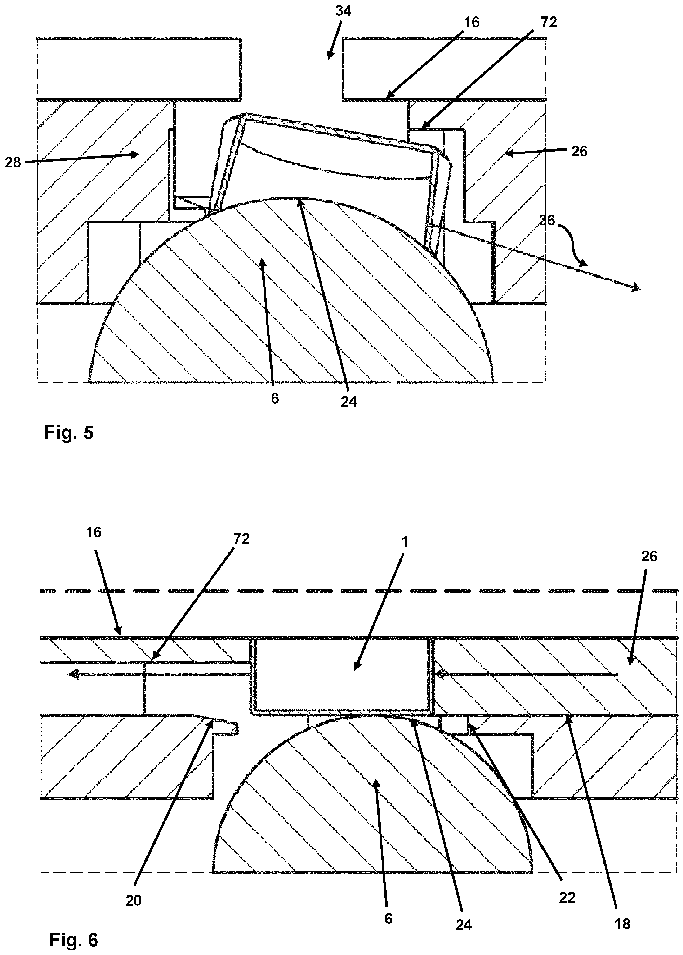

Die Fig. 5 zeigt einen weiteren Querschnitt durch den Kanal **4** in demselben Zustand wie bei der Fig. 3. Das Abneigen des Bechers **1** in Richtung der ersten Seitenwand **26** wird durch den Pfeil **36** angezeigt. Wie in der Figur gezeigt, halten die Randen der Öffnung des Bechers **1** Kontakt mit dem Sortierelement **6,** während er über die gewölbte Oberfläche **24** gleitet. Dies sorgt für einen besonders sanften Übergang in den Ausstoßpfad **14.**

Die Fig. 6 - 10 zeigen unterschiedliche Ansichten und Stadien der Bewegung eines Bechers **1** in der ersten (erwünschten) Ausrichtung entlang des Kanals **4.** Die Öffnung des Bechers **1** ist nach oben gerichtet, sodass kein Eingriff mit dem Sortierelement **6** möglich ist.

Wie in der Fig. 6 gezeigt fließt der Becher **1** in einer Hauptfließrichtung, welche durch horizontale Pfeile gekennzeichnet ist. Die Höhe des Kanals, d.h. der Abstand zwischen dem Kanalboden **18** und der Kanaldecke **16** ist an die Höhe des Bechers **1** angepasst. Aufgrund des ausreichenden Durchmessers und der nicht-konkaven Form der unteren Fläche des Bechers **1** kann dieser sowohl eine hintere Kante **22** der unteren Aussparung als auch den höchsten Punkt der gewölbten Oberfläche 24 überspannen. Da der höchste Punkt der gewölbten Oberfläche **24** im Wesentlichen auf gleicher Höhe wie der Kanalboden **18** positioniert ist, wird der Becher **1** bei seiner Bewegung über das Sortierelement **6** nicht abgeneigt. Da das Sortierelement **6** nicht in den Becher **1** eingreifen kann, sinkt er auch nicht in die untere Aussparung **8.** Der Becher **1** kann so den Zwischenraum zwischen der Hinterkante **22** der unteren Aussparung **8** und der obersten Stelle des Sortierelements **6** überbrücken.

Während der Becher **1** weiter durch den Kanal **4** fließt, verliert er den Kontakt mit der hinteren Kante **22.** Die Anpassung der Kanalhöhe an die Höhe des Bechers **1** verhindert, dass er in die Hauptfließrichtung wesentlich kippen kann. Solange jedoch ein gewisser Spielraum in der Höhe des Kanals **4** vorhanden ist, kann der Becher **1** in geringem Maße kippen, als er sich über das Sortierelement **6** bewegt. Auch das fehlende Absenken, das Vorhandensein der oberen Kante **72** und die Anpassung der Breite des Kanals verhindert bzw. begrenzt das Kippen des Bechers **1** in seitlicher Richtung. Da der Becher nicht mit dem Sortierelement **6** in Eingriff kommt, erreicht die untere Fläche des Bechers **1** beim Kippen die vordere Kante **20** der unteren Aussparung **8.**

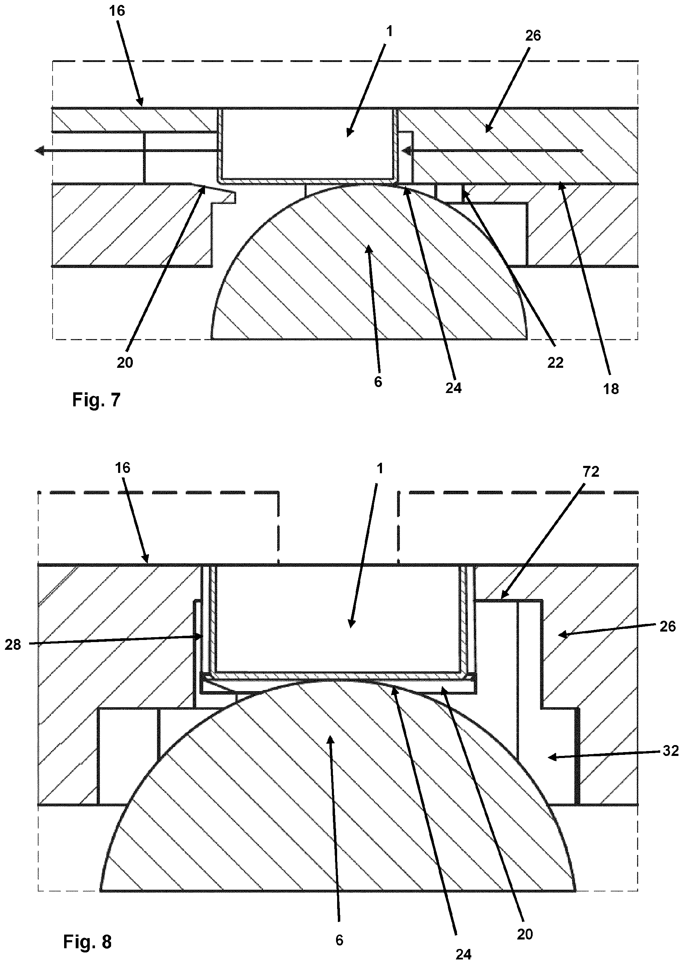

Wie in der Fig. 7 gezeigt, ist der Durchmesser des Bechers **1** so bemessen, dass er auch den obersten Punkt des Sortierelements 6 und die vordere Kante **20** überbrücken kann, selbst wenn er leicht abgeneigt ist. Da die vordere Kante **20** eine Fase aufweist, kommt der Becher **1** durch die Vorwärtsbewegung wieder sanft auf die Ebene des Kanalbodens **18.** Der Becher **1** fließt also weiter durch die Vorrichtung, ohne aussortiert zu werden.

Fig. 8 zeigt einen Querschnitt durch die Vorrichtung **2,** wenn der Becher **1** über die Fase der vorderen Kante **20** fließt. Die Anpassung des Querschnitts des Kanals **4** an den des Bechers **1** ist hier deutlich zu erkennen. Wie weiterhin erkennbar ist, befindet sich ein geringer Spielraum zwischen dem Becher **1** und den Seitenwänden **26** und **28** des Kanals. In der vertikalen Richtung ist nahezu kein Spielraum vorhanden. Ein Kippen des Bechers **1** in Quer- oder Längsrichtung ist daher stark begrenzt bzw. nicht möglich, was zusätzlich durch das Vorhandensein der oberen Kante **72** unterstützt wird.

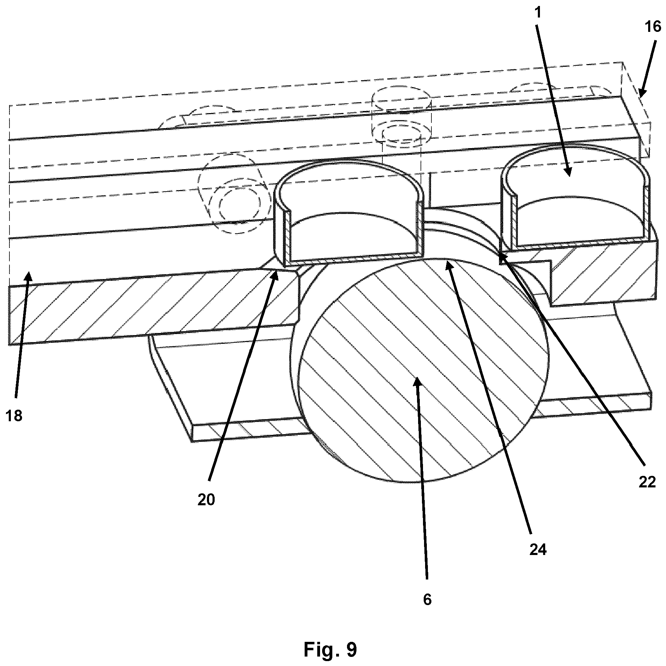

Fig. 9 ist eine perspektivische Ansicht, die einen Schnitt durch das Sortierelement **6** zeigt. Das Sortierelement **6** hat die Form einer regelmäßigen Kugel. Die Kugel ist so positioniert, dass ihr oberster Punkt ungefähr in der Mitte der unteren Aussparung **8** liegt. Da die Becher **1** eine regelmäßige zylindrische Form haben, kann mit der zentrierten Kugel ein optimaler Eingriff erreicht werden.

Der Durchmesser der Kugel ist ungefähr doppelt so groß wie der Durchmesser der Öffnung des Bechers **1,** sodass der Becher **1** am Sortierelement **6** nicht eingeklemmt werden kann. In dieser beispielhaften Ausführungsform fließen die Becher **1** in der Hauptfließrichtung aufgrund ihrer Trägheit über das Sortierelement **6,** nachdem sie aus einer Zuführeinheit ausgeworfen wurden. Das abgebildete Sortierelement **6** ist statisch gelagert. Das Sortierelement **6** fordert die Becher daher nicht aktiv durch den Kanal **4,** obwohl dies durch Hinzufügen eines Aktuators, beispielsweise eines Motors, zu der Vorrichtung ebenfalls möglich ist. Es hat sich gezeigt, dass eine aktive Bewegung des Sortierelements **6** insbesondere für Bechergeschwindigkeiten bis zu 200 Becher/min sinnvoll ist.

Wie auch in Fig. 9 zu erkennen ist, umfasst die vordere Kante **20** eine vertikale Fläche und zwei progressive schräge Flächen, die von der vertikalen Fläche in den Kanalboden **18** übergehen. Diese schrägen Flächen, die im Sinne der Erfindung als Fasen bezeichnet werden, bilden eine Rampe für die Bewegung des Bechers **1** der erwünschten Ausrichtung über sie. Dadurch werden die entgegengerichteten horizontalen Kräfte, denen die Becher **1** ausgesetzt sind, reduziert, wodurch die Gefahr von Kratzern oder Rissen an den Bechern **1** verringert wird. Die Verringerung der Oberflächenbeschädigung ist besonders vorteilhaft für die Vermeidung von Kontaminationen, insbesondere in der pharmazeutischen Industrie.

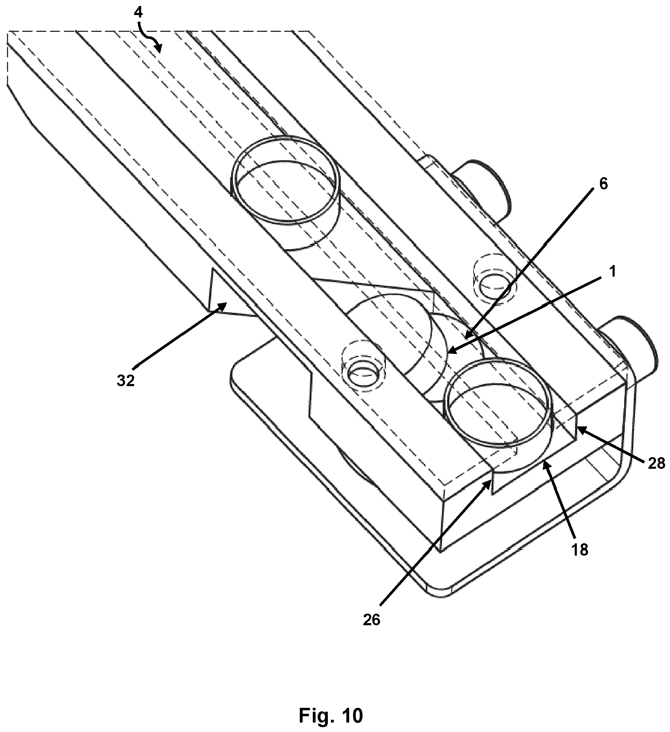

Fig. 10 zeigt eine Mehrzahl von Bechern, die durch die Vorrichtung fließen. Wie ersichtlich, ist ein Becher **1** der unerwünschten Ausrichtung mit dem Sortierelement **6** in Eingriff gekommen und hat begonnen, sich in Richtung des Ausstoßpfads **14** zu neigen. Dabei ist zu beobachten, dass die Neigung eine Längs- und eine Seitenkomponente umfasst und durch die Richtung der vorderen Kante **20** und einer vorderen Wand **32** der zweiten Aussparung gelenkt wird. Da die Vorwärts- und Längsbewegung des Bechers **1** durch seine Trägheit angetrieben wird, fällt eine Komponente seiner Vorwärtsbewegung mit der Richtung des Ausstoßpfads zusammen. Der stumpfe Winkel, den die Bewegung des Bechers **1** von der Hauptfließrichtung zum Ausstoßpfad bildet, verbessert somit die Effizienz der Aussortierung und reduziert die Reibung und den Verschleiß an der vorderen Wand **32** der seitlichen Aussparung. Die Becher **1** werden dadurch auch vor der Gefahr einer Beschädigung geschützt, zum Beispiel im Vergleich zu einem kleineren stumpfen Winkel oder einem rechtwinkligen Ausstoßpfad.

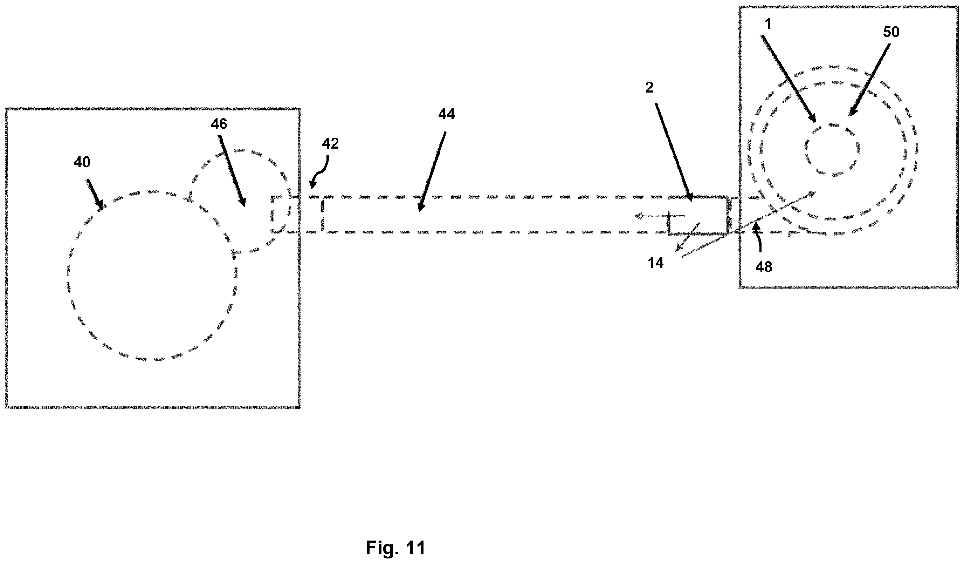

Die Fig. 11 zeigt eine perspektivische Draufsicht auf ein System gemäß einer bevorzugten Ausführungsform der Erfindung, wobei eine erfindungsgemäße Vorrichtung **2** zwischen einer Zuführeinheit **50** becherförmiger Komponenten und einer Einlegeeinheit **46** einer Rundlaufpresse **40** zwischengeschaltet ist.

Die Zuführeinheit **50** ist vorzugsweise eine Vorrichtung, welche die Becher **1** in zufälligen Ausrichtungen in den Kanal **4** der Vorrichtung **2** entlässt. Die Zuführeinheit übt eine ausreichende Kraft auf die Becher **1** aus, welche sie in die Hauptfließrichtung treibt. Eine solche Kraft kann zum Beispiel die Zentrifugalkraft einer rotierenden Trommel sein, welche dem Fachmann bekannt ist. Die Zuführeinheit umfasst vorzugsweise auch Mittel, um die Becher **1** mit minimaler Reibung und geringem Risiko einer Beschädigung in den Kanal **4** zu leiten. Zum Beispiel kann ein Auslass der Zuführeinheit einen sich allmählich verengenden Querschnitt haben, der an den Abmessungen des Kanalquerschnitts der Vorrichtung **2** endet. Die Bewegung der Becher durch den Kanal **4** wird insbesondere durch den Staudruck von folgender Becher bestimmt, die Bewegung kann zudem durch die Schwerkraft unterstützt werden, wenn der Kanal geneigt ist. Die Zuführeinheit **50** ist ebenfalls über einen Rückführungskanal **48** mit der Vorrichtung **2** verbunden. Dieser Rückführungskanal **48** führt die aussortierten Becher **1** zurück zur Zuführeinheit **50,** insbesondere zur rotierenden Trommel der Zuführeinheit, so dass sie wieder in den Kanal **4** beschleunigt werden können. Vorzugsweise ist der Rückführungskanal **48** mit der seitlichen Aussparung **10** der Vorrichtung **2** verbunden. Der Rückführungskanal kann einen Aktuator, wie z.B. einen Druckluftspender oder ein Transportband, umfassen, um die Becher 1 aktiv in die Zuführeinheit zu fahren. Alternativ oder zusätzlich kann der Rückführungskanal **48** nach unten geneigt sein, so dass die Becher **1** durch die Schwerkraft hindurchfließen.

Eine Transporteinheit **44,** welcher vorliegend als Transportband ausgebildet ist, verbindet die Sortiervorrichtung **2** mit einer Einlegeeinheit **46** zum Einlegen der Becher in Matrizen einer Rundlaufpresse **40.** Die Einlegeeinheit **46** kann beispielsweise zu diesem Zweck ein Drehkreuz mit mehreren Greifarmen umfassen, welche die ausgerichteten Becher **1** einzeln in die Matrizen der Rundlaufpresse **40** setzen.

### BEZUGSZEICHEN

- 1 -: becherförmige Komponente / Becher
- 2 -: Vorrichtung
- 4 -: Kanal
- 6 -: Sortierelement / Kugel
- 8 -: untere Aussparung
- 10 -: seitliche Aussparung
- 12 -: Hauptfließrichtung
- 14 -: Ausstoßpfad
- 16 -: Kanaldecke
- 18 -: Kanalboden
- 20 -: vordere Kante der unteren Aussparung
- 22 -: hintere Kante der unteren Aussparung
- 24 -: gewölbte Oberfläche des Sortierelements
- 26 -: erste Seitenwand des Kanals
- 28 -: zweite Seitenwand des Kanals
- 30 -: Eingriff der becherförmigen Komponente mit der gewölbten Oberfläche
- 32 -: Seitenwand des Ausstoßpfades
- 34 -: Schlitz in der Kanaldecke
- 36 -: Abkippen der becherförmigen Komponente nach Eingriff mit der gewölbten Oberfläche
- 40 -: Rundlaufpresse
- 42 -: Übergabeeinheit der ausgerichteten becherförmigen Komponenten
- 44 -: Transporteinheit
- 46 -: Einlegeeinheit
- 48 -: Rückführeinheit
- 50 -: Zuführeinheit für Schuttgut (zufällig ausgerichtete becherförmige Komponenten)
- 72 -: obere Kante der ersten Seitenwand des Kanals

## Patentansprüche

1. Vorrichtung (2) zum Transport von becherförmigen Komponenten (1) an eine Rundlaufpresse (40), wobei die Vorrichtung (2) einen Kanal (4) umfasst, dessen Querschnitt auf einen Querschnitt der becherförmigen Komponenten (1) angepasst ist, sodass die becherförmigen Komponenten (1) in den Kanal (4) entweder in einer ersten Ausrichtung mit einer Öffnung (74) nach oben oder in einer zweiten Ausrichtung mit der Öffnung (74) nach unten einführbar sind,
**dadurch gekennzeichnet, dass**
ein Kanalboden (18) des Kanals (4) eine untere Aussparung (8) für die Unterbringung eines Sortierelementes (6) umfasst, wobei das Sortierelement (6) eine nach oben ausgerichtete gewölbte Oberfläche (24) umfasst, welche dafür konfiguriert ist, mit der Öffnung (74) der becherförmigen Komponenten (1) in der zweiten Ausrichtung in Eingriff zu kommen und der Kanal (4) eine seitliche Aussparung (10) in einer ersten Seitenwand (26) für den Ausstoß der becherförmigen Komponenten (1) der zweiten Ausrichtung umfasst, wobei die seitliche Aussparung (10) mit der unteren Aussparung (8) verbunden ist und einen Ausstoßpfad (14) definiert.

2. Vorrichtung (2) gemäß dem vorherigen Anspruch
**dadurch gekennzeichnet, dass**
die Längsachse des Kanals (4) eine Hauptfließrichtung (12) der becherförmigen Komponenten (1) definiert, wobei die untere Aussparung (8) durch eine vordere Kante (20) im Kanalboden (18) in Bezug auf die Hauptfließrichtung (12) begrenzt ist, welche einen stumpfen Winkel zur Hauptfließrichtung (12) bildet und dafür konfiguriert ist, ein Aussto-ßen der becherförmigen Komponenten (1) der zweiten Ausrichtung entlang des Ausstoßpfades (14) zu unterstützen.

3. Vorrichtung (2) gemäß einem der vorherigen Ansprüche
**dadurch gekennzeichnet, dass**
der durch die seitliche Aussparung (10) definierte Ausstoßpfad (14) einen Winkel zwischen 95° - 175°, besonders bevorzugt zwischen 110° - 160°, noch bevorzugter zwischen 120° - 150° zu einer Hauptfließrichtung (12) bildet,

4. Vorrichtung (2) gemäß einem der vorherigen Ansprüche
**dadurch gekennzeichnet, dass**
die untere Aussparung (8) durch eine vordere Kante (20) im Kanalboden (18) in Bezug auf eine Hauptfließrichtung (12) begrenzt ist, wobei die vordere Kante (20) als Fase mit abgeschrägter Fläche ausgebildet ist.

5. Vorrichtung (2) gemäß einem der vorherigen Ansprüche
**dadurch gekennzeichnet, dass**
die gewölbte Oberfläche (24) des Sortierelementes (6) derart ausgestaltet ist, dass ein Eingriff zwischen einer becherförmigen Komponente (1) in der zweiten Ausrichtung und dem Sortierelement (6) ein Absenken der becherförmigen Komponente (1) und eine Abwärtsneigung der becherförmigen Komponente (1) in Richtung der ersten Seitenwand (26) bewirkt, wobei das Absenken vorzugsweise 0,5 - 3 mm, besonders bevorzugt 1 - 2 mm beträgt.

6. Vorrichtung (2) gemäß einem der vorherigen Ansprüche
**dadurch gekennzeichnet, dass**
die seitliche Aussparung (10) durch eine obere Kante (72) in der ersten Seitenwand (26) des Kanals (4) begrenzt ist, wobei die obere Kante (72) vorzugsweise dazu eingerichtet ist, einen Ausstoß der becherförmigen Komponente (1) der ersten Ausrichtung aus der seitlichen Aussparung (10) zu verhindern und deren Bewegung entlang einer Längsachse des Kanals (4) zu unterstützen.

7. Vorrichtung (2) gemäß dem vorherigen Anspruch
**dadurch gekennzeichnet, dass**
eine Höhe der oberen Kante (72) von 0,5 mm bis 3mm, vorzugsweise von 1 mm bis 2 mm beträgt.

8. Vorrichtung (2) gemäß einem der vorherigen Ansprüche
**dadurch gekennzeichnet, dass**
ein oberster Punkt der gewölbten Oberfläche (24) des Sortierelementes (6) zu einer Oberfläche des Kanalbodens (18) innerhalb eines Toleranzbereichs von ± 10 mm, vorzugsweise ± 5 mm, ausgerichtet ist.

9. Vorrichtung (2) gemäß einem der vorherigen Ansprüche
**dadurch gekennzeichnet, dass**
dass die gewölbte Oberfläche (24) einer Oberfläche eines Rotationsellipsoids, bevorzugt einer Kugel, entspricht, wobei ein Radius des Rotationsellipsoids, bevorzugt der Kugel, einem 0,5- bis 4-fachen, vorzugsweise einem 0,75- bis 2-fachen einer maximalen Ausdehnung der Öffnung (74) der becherförmigen Komponente (1) entspricht.

10. Vorrichtung (2) gemäß einem der vorherigen Ansprüche
**dadurch gekennzeichnet, dass**
eine Decke (16) des Kanals (4) einen Längsschlitz (34) umfasst, wobei der Längsschlitz (34) vorzugsweise dafür konfiguriert ist, dass er einen Eingriff in die Bewegung der becherförmigen Komponenten (1) ermöglicht, insbesondere ein manuelles Verschieben einer eingeklemmten Komponente (1).

11. Vorrichtung (2) gemäß einem der vorherigen Ansprüche
**dadurch gekennzeichnet, dass**
der Kanal (4) im Bereich des Sortierelementes eine Zug- oder Druckvorrichtung, vorzugsweise einen Druckluftausstoßer, eine Saugeinheit und/oder ein Elektromagnet, aufweist, welche derart konfiguriert ist, dass die becherförmigen Komponenten (1) eine Vorspannkraft zur ersten Seitenwand (26) hin erfahren.

12. Kit umfassend eine Vorrichtung gemäß einem der vorherigen Ansprüche zum Transport von becherförmigen Komponenten an eine Rundlaufpresse und eine Vielzahl von becherförmigen Komponenten.

13. System umfassend
a. eine Vorrichtung (2) nach einem der vorhergehenden Ansprüche
b. eine Zuführeinheit becherförmiger Komponenten (50) stromaufwärts der Vorrichtung (2),
c. eine Einlegeeinheit (46) stromabwärts der Vorrichtung (2) und
d. eine Rundlaufpresse (40) mit mehreren Matrizen,
wobei die Einlegeeinheit (46) dafür konfiguriert ist, becherförmige Komponenten (1) in der ersten Ausrichtung einzeln von der Vorrichtung (2) zu den Matrizen der Rundlaufpresse (40) zu überführen und die Rundlaufpresse (40) dafür ausgelegt ist, ein Pressgut in die becherförmigen Komponenten (1) zu verpressen.

14. Verfahren zum Zuführen vereinzelter ausgerichteter becherförmiger Komponenten (1) in Matrizen einer Rundlaufpresse (40),
**dadurch gekennzeichnet, dass**
das Verfahren die folgenden Schritte umfasst:
- Zuführung von becherförmigen Komponenten (1) in eine Vorrichtung (2) gemäß einem der Ansprüche 1 - 11,
- Ausstoß der becherförmigen Komponenten (1) der zweiten Ausrichtung aus der seitlichen Aussparung (10) der Vorrichtung (2),
- Vereinzelte Einlegung der becherförmigen Komponenten (1) der ersten Ausrichtung in Matrizen einer Rundlaufpresse (40) mittels einer Einlegeeinheit (46).

15. Verfahren gemäß dem vorherigen Anspruch,
**dadurch gekennzeichnet, dass**
die ausgestoßenen becherförmigen Komponenten (1) wieder in die Vorrichtung (2) gemäß einem der Ansprüche 1 - 11 zugeführt werden.
